# EUROPEAN PATENT SPECIFICATION

(11) **EP 2 354 929 B1**
(45) Date of publication and mention of the grant of the patent: **22.04.2015**
(21) Application number: 11151079.8
(22) Date of filing: 17.01.2011
(51) Int. Cl.: G06F 3/023, G06F 3/0488, G06F 9/44

(54) **Automatic keyboard layout determination**
Automatische Tastaturlayoutbestimmung
Détermination automatique de l'agencement d'un clavier

(30) Priority: 15.01.2010 US 295674 P; 28.05.2010 US 789658
(43) Date of publication of application: 10.08.2011
(73) Proprietor: Apple Inc., Cupertino, CA 95014 (US)
(72) Inventor: Bradford Allen Moore, San Francisco, CA 94110 (US); Stephen W. Swales, Sunnyvale, CA 94087 (US)
(74) Representative: Barton, Russell Glen

(56) References cited:
- EP-A2- 1 043 649
- US-A- 4 459 581
- US-A1- 2008 259 039
- US-A1- 2008 270 114
- US-A1- 2009 182 901
- US-B1- 6 615 287
- INTERNATIONAL BUSINESS MACHINES CORPORATION: "A method of providing Country Keyboard support, used by IBM TouchBoardTM, a Softkeyboard application", RESEARCH DISCLOSURE, MASON PUBLICATIONS, HAMPSHIRE, GB, vol. 458, no. 125, 1 June 2002 (2002-06-01), XP007130656, ISSN: 0374-4353
- HEWLETT-PACKARD COMPANY ET AL: "Default BIOS language set based on keyboard language identification", RESEARCH DISCLOSURE, MASON PUBLICATIONS, HAMPSHIRE, GB, vol. 545, no. 25, 1 September 2009 (2009-09-01), page 970, XP007139295, ISSN: 0374-4353

## Description

### TECHNICAL FIELD

The disclosed embodiments relate generally to electronic devices with touch-sensitive surfaces, and more particularly, to electronic devices with touch-sensitive surfaces that are configured to accept input from hardware keyboards.

### BACKGROUND

The use of touch-sensitive surfaces as input devices for computers and other electronic computing devices has increased significantly in recent years. Exemplary touch-sensitive surfaces include touch pads and touch screen displays. Such surfaces are widely used to manipulate user interface objects on a display.

Existing methods for determining keyboard layouts are cumbersome and inefficient. Currently, there is no keyboard language and keyboard layout that is universally used. Typically, a user must specify a keyboard layout or answer a series of keyboard configuration questions.

The following documents provide relevant background information to the present application: European patent application EP1043649 A2, and International Business Machines Corporation: "A method of providing Country Keyboard support, used by IBM TouchBoardTM, a Softkeyboard application", RESEARCH DISCLOSURE, MASON PUBLICATIONS, HAMPSHIRE, GB, vol. 458, no. 125, 1 June 2002 (2002-06-01), ISSN: 0374-4353.

### SUMMARY

Accordingly, there is a need for computing devices with faster, more efficient methods and interfaces for automatically determining the layout of a keyboard and configuring a keyboard. Such methods and interfaces may complement or replace conventional methods for automatically determining keyboard layouts and configuring keyboards. Such methods and interfaces reduce the cognitive burden on a user and produce a more efficient human-machine interface. For battery-operated computing devices, such methods and interfaces conserve power and increase the time between battery charges.

The above deficiencies and other problems associated with user interfaces for computing devices with touch-sensitive surfaces are reduced or eliminated by the disclosed devices. In some embodiments, the device is a desktop computer. In some embodiments, the device is portable (e.g., a notebook computer, tablet computer, or handheld device). In some embodiments, the device has a touchpad. In some embodiments, the device has a touch-sensitive display (also known as a "touch screen" or "touch screen display"). In an aspect of the invention, the device has a graphical user interface (GUI), one or more processors, memory and one or more modules, programs or sets of instructions stored in the memory for performing multiple functions. In an aspect of the invention, the user interacts with the GUI primarily through finger contacts and gestures on the touch-sensitive surface. In some embodiments, the functions may include image editing, drawing, presenting, word processing, website creating, disk authoring, spreadsheet making, game playing, telephoning, video conferencing, e-mailing, instant messaging, workout support, digital photographing, digital videoing, web browsing, digital music playing, and/or digital video playing. Executable instructions for performing these functions may be included in a computer readable storage medium or other computer program product configured for execution by one or more processors.

In accordance with an aspect of the invention, a method is provided to automatically determine a keyboard layout and configure the keyboard accordingly, including without user intervention. Language and location information are obtained from a plurality of hardware and software sources. The hardware and software sources are prioritized based on the reliability of the language and location information provided by the respective source. The language and location information from the source with the highest priority is mapped to a keyboard layout of a hardware and/or an on-screen keyboard. The keyboard layout is used in multiple ways. For example, in an aspect of the invention, the keyboard layout is used to configure a hardware keyboard to reflect an entry language and keyboard format that a user is likely to prefer based on the language and location information provided by the plurality of hardware and software sources. This enables the device to interpret key input signals from the hardware keyboard based on the determined keyboard layout without any need for the user to input keyboard configuration information in a separate keyboard configuration process.

In accordance with the invention, a method is performed at an electronic device that includes one or more processors, memory, and a display. The method includes obtaining at least one of language information and location information from one or more hardware and software information sources associated with the electronic device. The method also includes prioritizing the hardware and software information sources based on reliability of their associated language and location information. The method further includes determining a keyboard language and a keyboard layout for a hardware keyboard based on the language information and location information obtained from the information source having highest relative priority. The method further includes configuring the electronic device to interpret key input signals from the hardware keyboard based on the determined keyboard language and keyboard layout. In an aspect of the invention, the configuring can be done automatically, meaning without user intervention.

In accordance with an aspect of the invention, a method is performed at an electronic device that includes one or more processors, memory, and a display. The method includes obtaining at least one of language information and location information from one or more information sources associated with the electronic device. The method also includes prioritizing the information sources based on reliability of their associated language and location information. The method further includes determining a keyboard language and a keyboard layout for a keyboard based on the language information and location information obtained from the information source having highest relative priority. The method further includes configuring the electronic device to interpret input signals from the keyboard based on the determined keyboard language and keyboard layout.

In accordance with an aspect of the invention, an electronic device includes a touch-sensitive display, one or more processors, memory, and one or more programs; the one or more programs are stored in the memory and configured to be executed by the one or more processors and the one or more programs include instructions for performing the operations of any of the methods described above. In accordance with another aspect of the invention, a graphical user interface on an electronic device with a display, a memory, and one or more processors to execute one or more programs stored in the memory includes one or more of the elements displayed in any of the methods described above, which are updated in response to inputs, as described in any of the methods above. In accordance with another aspect of the invention, a computer readable storage medium has stored therein instructions which when executed by an electronic device with a touch-sensitive display, cause the device to perform the operations of any of the methods described above. In accordance with another aspect of the invention, an electronic device includes: a display; and means for performing the operations of any of the methods described above. In accordance with another aspect of the invention, an information processing apparatus, for use in an electronic device with a display, includes means for performing the operations of any of the methods described above.

In accordance with an aspect of the invention, an electronic device includes a processing unit and a display unit coupled to the processing unit. The processing unit is configured to: obtain at least one of language information and location information from one or more hardware and software information sources associated with the electronic device; prioritize the hardware and software information sources based on reliability of their associated language and location information; determine a keyboard language and a keyboard layout for a hardware keyboard based on the language information and location information obtained from the information source having highest relative priority; and configure the electronic device to interpret key input signals from the hardware keyboard based on the determined keyboard language and keyboard layout. The display unit is configured to display information associated with the interpreted key input signals.

In accordance with an aspect of the invention, an electronic device includes a processing unit and a display unit coupled to the processing unit. The processing unit is configured to: obtain at least one of language information and location information from one or more information sources associated with the electronic device; prioritize the information sources based on reliability of their associated language and location information; determine a keyboard language and a keyboard layout for a keyboard based on the language information and location information obtained from the information source having highest relative priority; and configure the electronic device to interpret input signals from the keyboard based on the determined keyboard language and keyboard layout. The display unit is configured to display information associated with the interpreted key input signals.

Thus, electronic devices with displays are provided with faster, more efficient methods and interfaces for automatically determining keyboard layouts and configuring keyboards, thereby increasing the effectiveness, efficiency, and user satisfaction with such devices. Such methods and interfaces may complement or replace conventional methods for determining keyboard layouts and configuring keyboards.

### BRIEF DESCRIPTION OF THE DRAWINGS

For a better understanding of the aforementioned embodiments of the invention as well as additional embodiments thereof, reference should be made to the Description of Embodiments below, in conjunction with the following drawings in which like reference numerals refer to corresponding parts throughout the figures.

Figures 1A and 1B are block diagrams illustrating portable multifunction devices with touch-sensitive displays in accordance with some embodiments.
Figure 1C is a block diagram illustrating exemplary components for event handling in accordance with some embodiments.
Figure 2 illustrates a portable multifunction device having a touch screen in accordance with some embodiments.
Figure 3 is a block diagram of an exemplary multifunction device with a display and a touch-sensitive surface in accordance with some embodiments.
Figures 4A and 4B illustrate exemplary user interfaces for a menu of applications on a portable multifunction device in accordance with some embodiments.
Figure 4C illustrates an exemplary user interface for a multifunction device with a touch-sensitive surface that is separate from the display in accordance with some embodiments.
Figure 5 is a block diagram of the sources a multifunction device can interact with to obtain keyboard layout, language and location information.
Figures 6A, 6B, 6C, and 6D are block diagrams showing hardware keyboard input on the multifunction device.
Figures 7A and 7B are flow diagrams illustrating a method of automatically determining a keyboard layout in accordance with some embodiments.
Figure 8 is a functional block diagram of an electronic device in accordance with some embodiments.

### DESCRIPTION OF EMBODIMENTS

Reference will now be made in detail to embodiments, examples of which are illustrated in the accompanying drawings. In the following detailed description, numerous specific details are set forth in order to provide a thorough understanding of the present invention. However, it will be apparent to one of ordinary skill in the art that the present invention may be practiced without these specific details. In other instances, well-known methods, procedures, components, circuits, and networks have not been described in detail so as not to unnecessarily obscure aspects of the embodiments.

It will also be understood that, although the terms first, second, etc. may be used herein to describe various elements, these elements should not be limited by these terms. These terms are only used to distinguish one element from another. For example, a first contact could be termed a second contact, and, similarly, a second contact could be termed a first contact, without departing from the scope of the present invention. The first contact and the second contact are both contacts, but they are not the same contact.

The terminology used in the description of the invention herein is for the purpose of describing particular embodiments only and is not intended to be limiting of the invention. As used in the description of the invention and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" may be construed to mean "when" or "upon" or "in response to determining" or "in response to detecting," depending on the context. Similarly, the phrase "if it is determined" or "if [a stated condition or event] is detected" may be construed to mean "upon determining" or "in response to determining" or "upon detecting [the stated condition or event]" or "in response to detecting [the stated condition or event]," depending on the context.

Embodiments of computing devices, user interfaces for such devices, and associated processes for using such devices are described. In some embodiments, the computing device is a portable communications device such as a mobile telephone that also contains other functions, such as PDA and/or music player functions. Exemplary embodiments of portable multifunction devices include, without limitation, the iPhone® and iPod Touch® devices from Apple Inc. of Cupertino, California. Other portable devices such as laptops or tablet computers with touch-sensitive surfaces (e.g., touch screen displays and/or touch pads) may also be used. It should also be understood that, in some embodiments, the device is not a portable communications device, but is a desktop computer with a touch-sensitive surface (e.g., a touch screen display and/or a touch pad).

In the discussion that follows, a computing device that includes a display and a touch-sensitive surface is described. It should be understood, however, that the computing device may include one or more other physical user-interface devices, such as a physical keyboard, a mouse and/or a joystick.

The device supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, and/or a digital video player application.

The various applications that may be executed on the device may use at least one common physical user-interface device, such as the touch-sensitive surface. One or more functions of the touch-sensitive surface as well as corresponding information displayed on the device may be adjusted and/or varied from one application to the next and/or within a respective application. In this way, a common physical architecture (such as the touch-sensitive surface) of the device may support the variety of applications with user interfaces that are intuitive and transparent.

The user interfaces may include one or more soft keyboard or on screen keyboards embodiments. The soft keyboard embodiments may include standard (QWERTY, AZERTY, Dvorak) and/or non-standard configurations of symbols on the displayed icons of the keyboard, such as those described in U.S. Patent Applications 11/459,606 , "Keyboards For Portable Electronic Devices," filed July 24, 2006, 11/459,615 , "Touch Screen Keyboards For Portable Electronic Devices," filed July 24, 2006, and 61/210,331 , "Smart Keyboard Management for a Multifunction Device with a Touch Screen Display," filed March 16, 2009. The soft keyboard may be in any language. The keyboard embodiments may include a reduced number of icons (or soft keys) relative to the number of keys in existing physical keyboards, such as that for a typewriter. This may make it easier for users to select one or more icons in the keyboard, and thus, one or more corresponding symbols. The keyboard embodiments may be adaptive. For example, displayed icons may be modified in accordance with user actions, such as selecting one or more icons and/or one or more corresponding symbols.
One or more applications on the device may utilize common and/or different keyboard embodiments. Thus, the keyboard embodiment used may be tailored to at least some of the applications. In some embodiments, one or more keyboard embodiments may be tailored to a respective user. For example, one or more keyboard embodiments may be tailored to a respective user based on a word usage history (lexicography, slang, individual usage) of the respective user. Some of the keyboard embodiments may be adjusted to reduce a probability of a user error when selecting one or more icons, and thus one or more symbols, when using the soft keyboard embodiments.

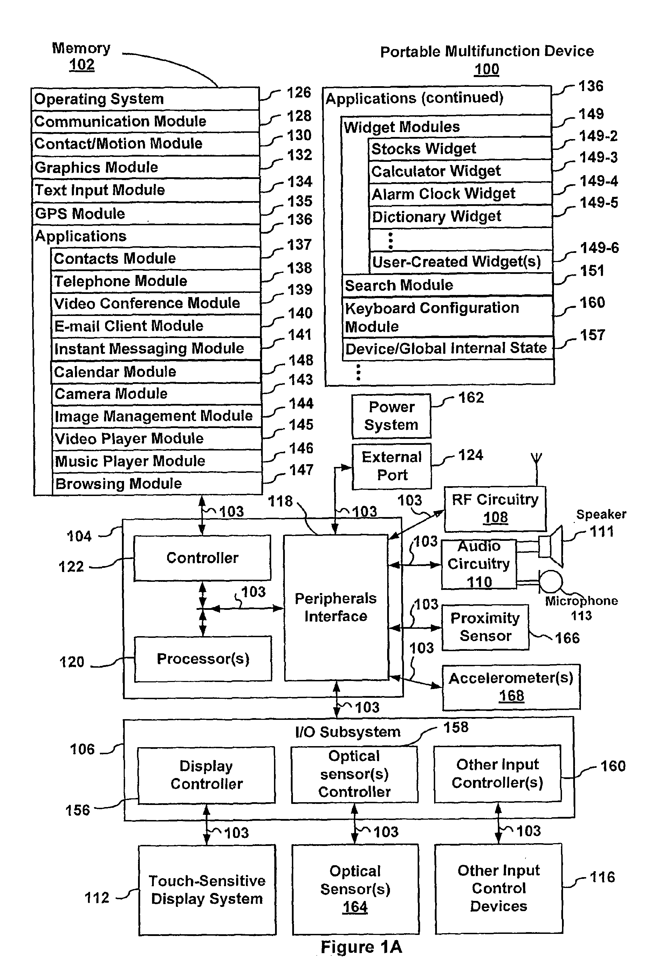

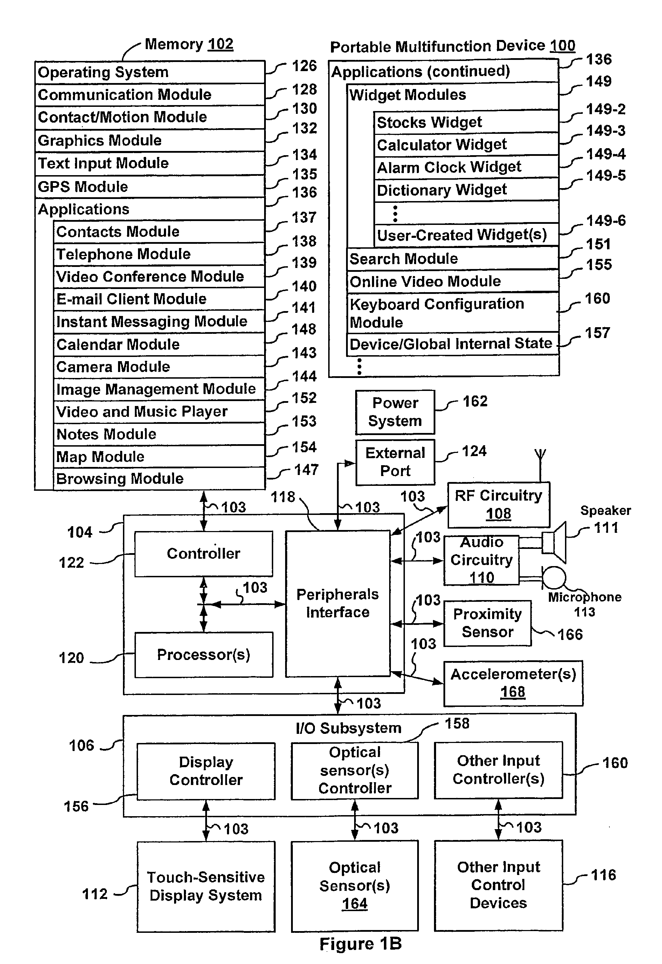

Attention is now directed toward embodiments of portable devices with touch-sensitive displays. Figures 1A and 1B are block diagrams illustrating portable multifunction devices 100 with touch-sensitive displays 112 in accordance with some embodiments. Touch-sensitive display 112 is sometimes called a "touch screen" for convenience, and may also be known as or called a touch-sensitive display system. Device 100 may include memory 102 (which may include one or more computer readable storage mediums), memory controller 122, one or more processing units (CPU's) 120, peripherals interface 118, RF circuitry 108, audio circuitry 110, speaker 111, microphone 113, input/output (I/O) subsystem 106, other input or control devices 116, and external port 124. Device 100 may include one or more optical sensors 164. These components may communicate over one or more communication buses or signal lines 103.

It should be appreciated that device 100 is only one example of a portable multifunction device, and that device 100 may have more or fewer components than shown, may combine two or more components, or may have a different configuration or arrangement of the components. The various components shown in Figures 1A and 1B may be implemented in hardware, software, or a combination of both hardware and software, including one or more signal processing and/or application specific integrated circuits.

Memory 102 may include high-speed random access memory and may also include non-volatile memory, such as one or more magnetic disk storage devices, flash memory devices, or other non-volatile solid-state memory devices. Access to memory 102 by other components of device 100, such as CPU 120 and the peripherals interface 118, may be controlled by memory controller 122.

Peripherals interface 118 can be used to couple input and output peripherals of the device to CPU 120 and memory 102. The one or more processors 120 run or execute various software programs and/or sets of instructions stored in memory 102 to perform various functions for device 100 and to process data.

In some embodiments, peripherals interface 118, CPU 120, and memory controller 122 may be implemented on a single chip, such as chip 104. In some other embodiments, they may be implemented on separate chips.

RF (radio frequency) circuitry 108 receives and sends RF signals, also called electromagnetic signals. RF circuitry 108 converts electrical signals to/from electromagnetic signals and communicates with communications networks and other communications devices via the electromagnetic signals. RF circuitry 108 may include well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. RF circuitry 108 may communicate with networks, such as the Internet, also referred to as the World Wide Web (WWW), an intranet and/or a wireless network, such as a cellular telephone network, a wireless local area network (LAN) and/or a metropolitan area network (MAN), and other devices by wireless communication. The wireless communication may use any of a plurality of communications standards, protocols and technologies, including but not limited to Global System for Mobile Communications (GSM), Enhanced Data GSM Environment (EDGE), high-speed downlink packet access (HSDPA), wideband code division multiple access (W-CDMA), code division multiple access (CDMA), time division multiple access (TDMA), Bluetooth, Wireless Fidelity (Wi-Fi) (e.g., IEEE 802.11a, IEEE 802.11b, IEEE 802.11g and/or IEEE 802.1 In), voice over Internet Protocol (VoIP), Wi-MAX, a protocol for e-mail (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), Instant Messaging and Presence Service (IMPS)), and/or Short Message Service (SMS), or any other suitable communication protocol, including communication protocols not yet developed as of the filing date of this document.

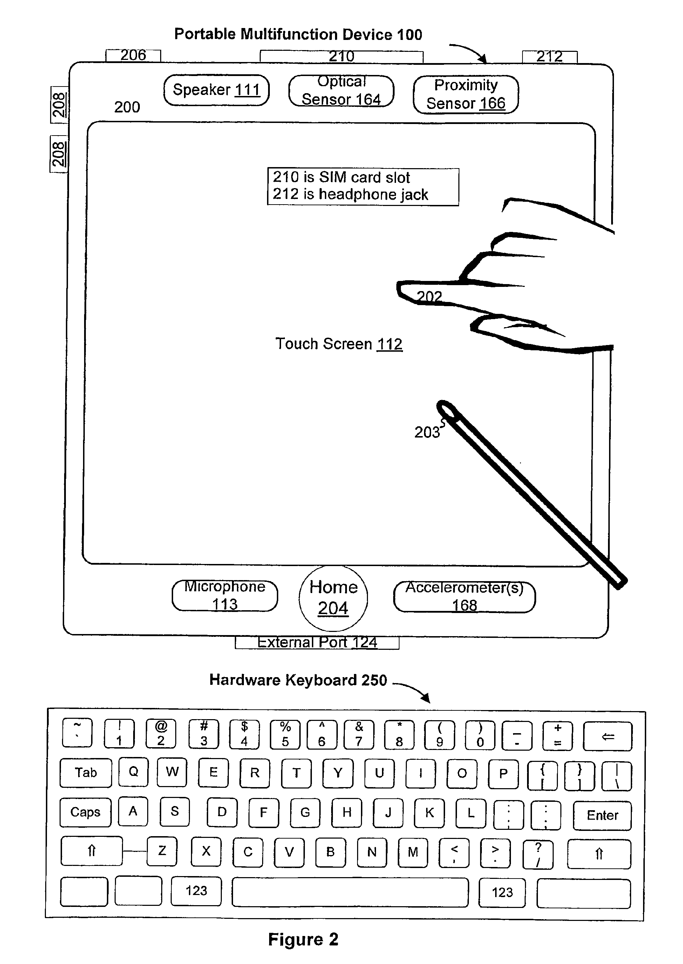

Audio circuitry 110, speaker 111, and microphone 113 provide an audio interface between a user and device 100. Audio circuitry 110 receives audio data from peripherals interface 118, converts the audio data to an electrical signal, and transmits the electrical signal to speaker 111. Speaker 111 converts the electrical signal to human-audible sound waves. Audio circuitry 110 also receives electrical signals converted by microphone 113 from sound waves. Audio circuitry 110 converts the electrical signal to audio data and transmits the audio data to peripherals interface 118 for processing. Audio data may be retrieved from and/or transmitted to memory 102 and/or RF circuitry 108 by peripherals interface 118. In some embodiments, audio circuitry 110 also includes a headset jack (e.g., 212, Figure 2). The headset jack provides an interface between audio circuitry 110 and removable audio input/output peripherals, such as output-only headphones or a headset with both output (e.g., a headphone for one or both ears) and input (e.g., a microphone).

I/O subsystem 106 couples input/output peripherals on device 100, such as touch screen 112 and other input control devices 116, to peripherals interface 118. I/O subsystem 106 may include display controller 156 and one or more input controllers 160 for other input or control devices. The one or more input controllers 160 receive/send electrical signals from/to other input or control devices 116. The other input control devices 116 may include physical buttons (e.g., push buttons, rocker buttons, etc.), dials, slider switches, joysticks, click wheels, and so forth. In some alternate embodiments, input controller(s) 160 may be coupled to any (or none) of the following: a keyboard, infrared port, USB port, and a pointer device such as a mouse. The one or more buttons (e.g., 208, Figure 2) may include an up/down button for volume control of speaker 111 and/or microphone 113. The one or more buttons may include a push button (e.g., 206, Figure 2). A quick press of the push button may disengage a lock of touch screen 112 or begin a process that uses gestures on the touch screen to unlock the device, as described in U.S. Patent Application 11/322,549 , "Unlocking a Device by Performing Gestures on an Unlock Image," filed December 23, 2005. A longer press of the push button (e.g., 206) may turn power to device 100 on or off. The user may be able to customize a functionality of one or more of the buttons. Touch screen 112 is used to implement virtual or soft buttons and one or more soft keyboards.

Touch-sensitive display 112 provides an input interface and an output interface between the device and a user. Display controller 156 receives and/or sends electrical signals from/to touch screen 112. Touch screen 112 displays visual output to the user. The visual output may include graphics, text, icons, video, and any combination thereof (collectively termed "graphics"). In some embodiments, some or all of the visual output may correspond to user-interface objects.

Touch screen 112 has a touch-sensitive surface, sensor or set of sensors that accepts input from the user based on haptic and/or tactile contact. Touch screen 112 and display controller 156 (along with any associated modules and/or sets of instructions in memory 102) detect contact (and any movement or breaking of the contact) on touch screen 112 and converts the detected contact into interaction with user-interface objects (e.g., one or more soft keys, icons, web pages or images) that are displayed on touch screen 112. In an exemplary embodiment, a point of contact between touch screen 112 and the user corresponds to a finger of the user.

Touch screen 112 may use LCD (liquid crystal display) technology, LPD (light emitting polymer display) technology, or LED (light emitting diode) technology, although other display technologies may be used in other embodiments. Touch screen 112 and display controller 156 may detect contact and any movement or breaking thereof using any of a plurality of touch sensing technologies now known or later developed, including but not limited to capacitive, resistive, infrared, and surface acoustic wave technologies, as well as other proximity sensor arrays or other elements for determining one or more points of contact with touch screen 112. In an exemplary embodiment, projected mutual capacitance sensing technology is used, such as that found in the iPhone(R) and iPod Touch(R) from Apple Inc. of Cupertino, California.

A touch-sensitive display in some embodiments of touch screen 112 may be analogous to the multi-touch sensitive touchpads described in the following U.S. Patents: 6,323,846 (Westerman et al.), 6,570,557 (Westerman et al.), and/or 6,677,932 (Westerman), and/or U.S. Patent Publication 2002/0015024A1. However, touch screen 112 displays visual output from portable device 100, whereas touch sensitive touchpads do not provide visual output.

A touch-sensitive display in some embodiments of touch screen 112 may be as described in the following applications: (1) U.S. Patent Application No. 11/381,313 , "Multipoint Touch Surface Controller," filed May 2, 2006; (2) U.S. Patent Application No. 10/840,862 , "Multipoint Touchscreen," filed May 6, 2004; (3) U.S. Patent Application No. 10/903,964 , "Gestures For Touch Sensitive Input Devices," filed July 30, 2004; (4) U.S. Patent Application No. 11/048,264 , "Gestures For Touch Sensitive Input Devices," filed January 31, 2005; (5) U.S. Patent Application No. 11/038,590 , "Mode-Based Graphical User Interfaces For Touch Sensitive Input Devices," filed January 18, 2005; (6) U.S. Patent

Application No. 11/228,758 , "Virtual Input Device Placement On A Touch Screen User Interface," filed September 16, 2005; (7) U.S. Patent Application No. 11/228,700 , "Operation Of A Computer With A Touch Screen Interface," filed September 16, 2005; (8) U.S. Patent Application No. 11/228,737 , "Activating Virtual Keys Of A Touch-Screen Virtual Keyboard," filed September 16, 2005; and (9) U.S. Patent Application No. 11/367,749 , "Multi-Functional Hand-Held Device," filed March 3, 2006. [0046] Touch screen 112 may have a resolution in excess of 100 dpi. In some embodiments, the touch screen has a resolution of approximately 160 dpi. The user may make contact with touch screen 112 using any suitable object or appendage, such as a stylus, a finger, and so forth. In some embodiments, the user interface is designed to work primarily with finger-based contacts and gestures, which can be less precise than stylus-based input due to the larger area of contact of a finger on the touch screen. In some embodiments, the device translates the rough finger-based input into a precise pointer/cursor position or command for performing the actions desired by the user.

In some embodiments, in addition to the touch screen, device 100 may include a touchpad (not shown) for activating or deactivating particular functions. In some embodiments, the touchpad is a touch-sensitive area of the device that, unlike the touch screen, does not display visual output. The touchpad may be a touch-sensitive surface that is separate from touch screen 112 or an extension of the touch-sensitive surface formed by the touch screen.

In some embodiments, device 100 may include a physical or virtual wheel (e.g., a click wheel) as input control device 116. A user may navigate among and interact with one or more graphical objects (e.g., icons) displayed in touch screen 112 by rotating the click wheel or by moving a point of contact with the click wheel (e.g., where the amount of movement of the point of contact is measured by its angular displacement with respect to a center point of the click wheel). The click wheel may also be used to select one or more of the displayed icons. For example, the user may press down on at least a portion of the click wheel or an associated button. User commands and navigation commands provided by the user via the click wheel may be processed by input controller 160 as well as one or more of the modules and/or sets of instructions in memory 102. For a virtual click wheel, the click wheel and click wheel controller may be part of touch screen 112 and display controller 156,
respectively. For a virtual click wheel, the click wheel may be either an opaque or semitransparent object that appears and disappears on the touch screen display in response to user interaction with the device. In some embodiments, a virtual click wheel is displayed on the touch screen of a portable multifunction device and operated by user contact with the touch screen.

Device 100 also includes power system 162 for powering the various components. Power system 162 may include a power management system, one or more power sources (e.g., battery, alternating current (AC)), a recharging system, a power failure detection circuit, a power converter or inverter, a power status indicator (e.g., a light-emitting diode (LED)) and any other components associated with the generation, management and distribution of power in portable devices.

Device 100 may also include one or more optical sensors 164. Figures 1A and 1B show an optical sensor coupled to optical sensor controller 158 in I/O subsystem 106. Optical sensor 164 may include charge-coupled device (CCD) or complementary metal-oxide semiconductor (CMOS) phototransistors. Optical sensor 164 receives light from the environment, projected through one or more lens, and converts the light to data representing an image. In conjunction with imaging module 143 (also called a camera module), optical sensor 164 may capture still images or video. In some embodiments, an optical sensor is located on the back of device 100, opposite touch screen display 112 on the front of the device, so that the touch screen display may be used as a viewfinder for still and/or video image acquisition. In some embodiments, an optical sensor is located on the front of the device so that the user's image may be obtained for videoconferencing while the user views the other video conference participants on the touch screen display. In some embodiments, the position of optical sensor 164 can be changed by the user (e.g., by rotating the lens and the sensor in the device housing) so that a single optical sensor 164 may be used along with the touch screen display for both video conferencing and still and/or video image acquisition.

Device 100 may also include one or more proximity sensors 166. Figures 1A and 1B show proximity sensor 166 coupled to peripherals interface 118. Alternately, proximity sensor 166 may be coupled to input controller 160 in I/O subsystem 106. Proximity sensor 166 may perform as described in U.S. Patent Application Nos. 11/241,839, "Proximity Detector In Handheld Device"; 11/240,788, "Proximity Detector In Handheld Device"; 11/620,702, "Using Ambient Light Sensor To Augment Proximity Sensor Output"; 11/586,862 , "Automated Response To And Sensing Of User Activity In Portable Devices"; and 11/638,251 , "Methods And Systems For Automatic Configuration Of Peripherals,". In some embodiments, the proximity sensor turns off and disables touch screen 112 when the multifunction device is placed near the user's ear (e.g., when the user is making a phone call).

Device 100 may also include one or more accelerometers 168. Figures 1A and 1B show accelerometer 168 coupled to peripherals interface 118. Alternately, accelerometer 168 may be coupled to an input controller 160 in I/O subsystem 106. Accelerometer 168 may perform as described in U.S. Patent Publication No. 20050190059 , "Acceleration-based Theft Detection System for Portable Electronic Devices," and U.S. Patent Publication No. 20060017692 , "Methods And Apparatuses For Operating A Portable Device Based On An Accelerometer,". In some embodiments, information is displayed on the touch screen display in a portrait view or a landscape view based on an analysis of data received from the one or more accelerometers. Device 100 optionally includes, in addition to accelerometer(s) 168, a magnetometer (not shown) and a GPS (or GLONASS or other global navigation system) receiver (not shown) for obtaining information concerning the location and orientation (e.g., portrait or landscape) of device 100.

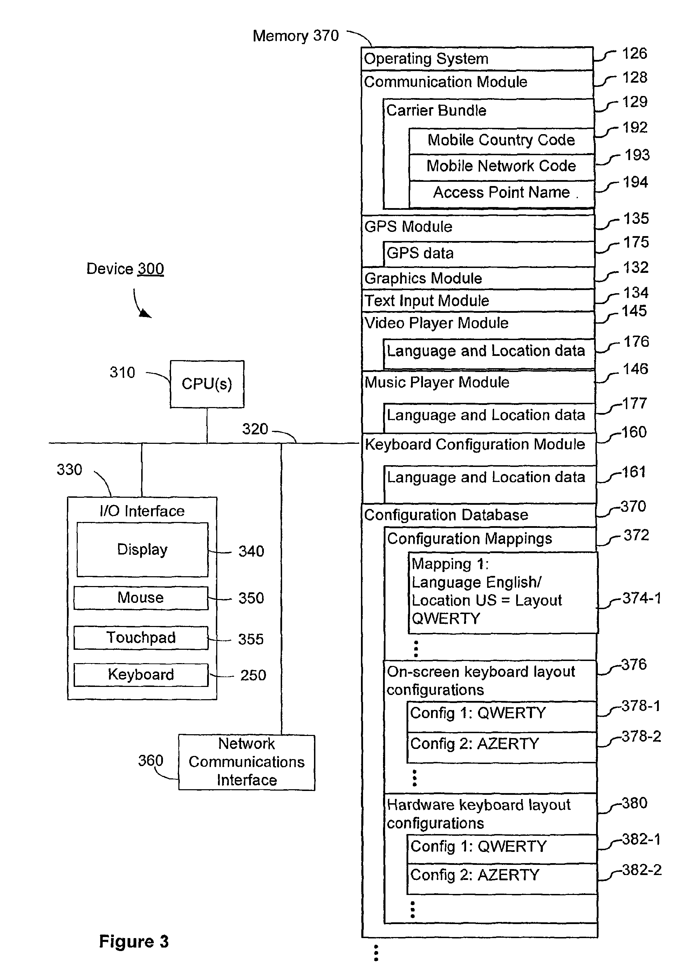

In some embodiments, the software components stored in memory 102 include operating system 126, communication module (or set of instructions) 128, contact/motion module (or set of instructions) 130, graphics module (or set of instructions) 132, text input module (or set of instructions) 134, Global Positioning System (GPS) module (or set of instructions) 135, and applications (or sets of instructions) 136. Furthermore, in some embodiments memory 102 stores device/global internal state 157, as shown in Figures 1A, 1B and 3. Device/global internal state 157 includes one or more of: active application state, indicating which applications, if any, are currently active; display state, indicating what applications, views or other information occupy various regions of touch screen display 112; sensor state, including information obtained from the device's various sensors and input control devices 116; and location information concerning the device's location and/or attitude.

Operating system 126 (e.g., Darwin, RTXC, LINUX, UNIX, OS X, WINDOWS, or an embedded operating system such as VxWorks) includes various software components and/or drivers for controlling and managing general system tasks (e.g., memory management, storage device control, power management, etc.) and facilitates communication between various hardware and software components.

Communication module 128 facilitates communication with other devices over one or more external ports 124 and also includes various software components for handling data received by RF circuitry 108 and/or external port 124. External port 124 (e.g., Universal Serial Bus (USB), FIREWIRE, etc.) is adapted for coupling directly to other devices or indirectly over a network (e.g., the Internet, wireless LAN, etc.). In some embodiments, the external port is a multi-pin (e.g., 30-pin) connector that is the same as, or similar to and/or compatible with the 30-pin connector used on iPod (trademark of Apple Inc.) devices.

Contact/motion module 130 may detect contact with touch screen 112 (in conjunction with display controller 156) and other touch sensitive devices (e.g., a touchpad or physical click wheel). Contact/motion module 130 includes various software components for performing various operations related to detection of contact, such as determining if contact has occurred (e.g., detecting a finger-down event), determining if there is movement of the contact and tracking the movement across the touch-sensitive surface (e.g., detecting one or more finger-dragging events), and determining if the contact has ceased (e.g., detecting a finger-up event or a break in contact). Contact/motion module 130 receives contact data from the touch-sensitive surface. Determining movement of the point of contact, which is represented by a series of contact data, may include determining speed (magnitude), velocity (magnitude and direction), and/or an acceleration (a change in magnitude and/or direction) of the point of contact. These operations may be applied to single contacts (e.g., one finger contacts) or to multiple simultaneous contacts (e.g., "multitouch"/multiple finger contacts). In some embodiments, contact/motion module 130 and display controller 156 detects contact on a touchpad. In some embodiments, contact/motion module 130 and controller 160 detects contact on a click wheel.

Contact/motion module 130 may detect a gesture input by a user. Different gestures on the touch-sensitive surface have different contact patterns. Thus, a gesture may be detected by detecting a particular contact pattern. For example, detecting a finger tap gesture includes detecting a finger-down event followed by detecting a finger-up (lift off) event at the same position (or substantially the same position) as the finger-down event (e.g., at the position of an icon). As another example, detecting a finger swipe gesture on the touch-sensitive surface includes detecting a finger-down event followed by detecting one or more finger-dragging events, and subsequently followed by detecting a finger-up (lift off) event.

Graphics module 132 includes various known software components for rendering and displaying graphics on touch screen 112 or other display, including components for changing the intensity of graphics that are displayed. As used herein, the term "graphics" includes any object that can be displayed to a user, including without limitation text, web pages, icons (such as user-interface objects including soft keys), digital images, videos, animations and the like.

In some embodiments, graphics module 132 stores data representing graphics to be used. Each graphic may be assigned a corresponding code. Graphics module 132 receives, from applications etc., one or more codes specifying graphics to be displayed along with, if necessary, coordinate data and other graphic property data, and then generates screen image data to output to display controller 156.

Text input module 134, which may be a component of graphics module 132, provides soft keyboards for entering text in various applications (e.g., contacts 137, e-mail 140, IM 141, browser 147, and any other application that needs text input).

GPS module 135 determines the location of the device and provides this information for use in various applications (e.g., to telephone 138 for use in location-based dialing, to camera 143 as picture/video metadata, and to applications that provide location-based services such as weather widgets, local yellow page widgets, and map/navigation widgets).

The applications 136 may include the following modules (or sets of instructions), or a subset or superset thereof:
- a contacts module 137 (sometimes called an address book or contact list);
- a telephone module 138;
- a video conferencing module 139;
- an e-mail client module 140;
- an instant messaging (IM) module 141;
- a workout support module;
- a camera module 143 for still and/or video images;
- an image management module 144;
- a video player module 145;
- a music player module 146;
- a browser module 147;
- a calendar module 148;
- widget modules 149, which may include weather widget, stocks widget 149-2, calculator widget 149-3, alarm clock widget 149-4, dictionary widget 149-5, and other widgets obtained by the user, as well as user-created widgets 149-6;
- widget creator module for making user-created widgets 149-6;
- search module 151;
- video and music player module 152, which merges video player module 145 and music player module 146;
- notes module 153;
- map module 154;
- online video module 155; and/or
- keyboard configuration module 160.

Examples of other applications 136 that may be stored in memory 102 include other word processing applications, other image editing applications, drawing applications, presentation applications, JAVA-enabled applications, encryption, digital rights management, voice recognition, and voice replication.

In conjunction with touch screen 112, display controller 156, contact module 130, graphics module 132, and text input module 134, contacts module 137 may be used to manage an address book or contact list (e.g., stored in application internal state 192 of contacts module 137 in memory 102 or memory 370), including: adding name(s) to the address book; deleting name(s) from the address book; associating telephone number(s), e-mail address(es), physical address(es) or other information with a name; associating an image with a name; categorizing and sorting names; providing telephone numbers or e-mail addresses to initiate and/or facilitate communications by telephone 138, video conference 139, e-mail 140, or IM 141; and so fourth.

In conjunction with RF circuitry 108, audio circuitry 110, speaker 111, microphone 113, touch screen 112, display controller 156, contact module 130, graphics module 132, and text input module 134, telephone module 138 may be used to enter a sequence of characters corresponding to a telephone number, access one or more telephone numbers in address book 137, modify a telephone number that has been entered, dial a respective telephone number, conduct a conversation and disconnect or hang up when the conversation is completed. As noted above, the wireless communication may use any of a plurality of communications standards, protocols and technologies.

In conjunction with RF circuitry 108, audio circuitry 110, speaker 111, microphone 113, touch screen 112, display controller 156, optical sensor 164, optical sensor controller 158, contact module 130, graphics module 132, text input module 134, contact list 137, and telephone module 138, videoconferencing module 139 includes executable instructions to initiate, conduct, and terminate a video conference between a user and one or more other participants in accordance with user instructions.

In conjunction with RF circuitry 108, touch screen 112, display controller 156, contact module 130, graphics module 132, and text input module 134, e-mail client module 140 includes executable instructions to create, send, receive, and manage e-mail in response to user instructions. In conjunction with image management module 144, e-mail client module 140 makes it very easy to create and send e-mails with still or video images taken with camera module 143.

In conjunction with RF circuitry 108, touch screen 112, display controller 156, contact module 130, graphics module 132, and text input module 134, the instant messaging module 141 includes executable instructions to enter a sequence of characters corresponding to an instant message, to modify previously entered characters, to transmit a respective instant message (for example, using a Short Message Service (SMS) or Multimedia Message Service (MMS) protocol for telephony-based instant messages or using XMPP, SIMPLE, or IMPS for Internet-based instant messages), to receive instant messages and to view received instant messages. In some embodiments, transmitted and/or received instant messages may include graphics, photos, audio files, video files and/or other attachments as are supported in a MMS and/or an Enhanced Messaging Service (EMS). As used herein, "instant messaging" refers to both telephony-based messages (e.g., messages sent using SMS or MMS) and Internet-based messages (e.g., messages sent using XMPP, SIMPLE, or IMPS).

In conjunction with RF circuitry 108, touch screen 112, display controller 156, contact module 130, graphics module 132, text input module 134, GPS module 135, map module 154, and music player module 146, workout support module 142 includes executable instructions to create workouts (e.g., with time, distance, and/or calorie burning goals); communicate with workout sensors (sports devices); receive workout sensor data; calibrate sensors used to monitor a workout; select and play music for a workout; and display, store and transmit workout data.

In conjunction with touch screen 112, display controller 156, optical sensor(s) 164, optical sensor controller 158, contact module 130, graphics module 132, and image management module 144, camera module 143 includes executable instructions to capture still images or video (including a video stream) and store them into memory 102, modify characteristics of a still image or video, or delete a still image or video from memory 102.

In conjunction with touch screen 112, display controller 156, contact module 130, graphics module 132, text input module 134, and camera module 143, image management module 144 includes executable instructions to arrange, modify (e.g., edit), or otherwise manipulate, label, delete, present (e.g., in a digital slide show or album), and store still and/or video images.

In conjunction with touch screen 112, display controller 156, contact module 130, graphics module 132, audio circuitry 110, and speaker 111, video player module 145 includes executable instructions to display, present or otherwise play back videos (e.g., on touch screen 112 or on an external, connected display via external port 124).

In conjunction with touch screen 112, display system controller 156, contact module 130, graphics module 132, audio circuitry 110, speaker 111, RF circuitry 108, and browser module 147, music player module 146 includes executable instructions that allow the user to download and play back recorded music and other sound files stored in one or more file formats, such as MP3 or AAC files. In some embodiments, device 100 may include the functionality of an MP3 player, such as an iPod (trademark of Apple Inc.).

In conjunction with RF circuitry 108, touch screen 112, display system controller 156, contact module 130, graphics module 132, and text input module 134, browser module 147 includes executable instructions to browse the Internet in accordance with user instructions, including searching, linking to, receiving, and displaying web pages or portions thereof, as well as attachments and other files linked to web pages.

In conjunction with RF circuitry 108, touch screen 112, display system controller 156, contact module 130, graphics module 132, text input module 134, e-mail client module 140, and browser module 147, calendar module 148 includes executable instructions to create, display, modify, and store calendars and data associated with calendars (e.g., calendar entries, to do lists, etc.) in accordance with user instructions.

In conjunction with RF circuitry 108, touch screen 112, display system controller 156, contact module 130, graphics module 132, text input module 134, and browser module 147, widget modules 149 are mini-applications that may be downloaded and used by a user (e.g., weather widget 149-1, stocks widget 149-2, calculator widget 149-3, alarm clock widget 149-4, and dictionary widget 149-5) or created by the user (e.g., user-created widget 149-6). In some embodiments, a widget includes an HTML (Hypertext Markup Language) file, a CSS (Cascading Style Sheets) file, and a JavaScript file. In some embodiments, a widget includes an XML (Extensible Markup Language) file and a JavaScript file (e.g., Yahoo! Widgets).

In conjunction with RF circuitry 108, touch screen 112, display system controller 156, contact module 130, graphics module 132, text input module 134, and browser module 147, the widget creator module 150 may be used by a user to create widgets (e.g., turning a user-specified portion of a web page into a widget).

In conjunction with touch screen 112, display system controller 156, contact module 130, graphics module 132, and text input module 134, search module 151 includes executable instructions to search for text, music, sound, image, video, and/or other files in memory 102 that match one or more search criteria (e.g., one or more user-specified search terms) in accordance with user instructions.

In conjunction with touch screen 112, display controller 156, contact module 130, graphics module 132, and text input module 134, notes module 153 includes executable instructions to create and manage notes, to do lists, and the like in accordance with user instructions.

In conjunction with RF circuitry 108, touch screen 112, display system controller 156, contact module 130, graphics module 132, text input module 134, GPS module 135, and browser module 147, map module 154 may be used to receive, display, modify, and store maps and data associated with maps (e.g., driving directions; data on stores and other points of interest at or near a particular location; and other location-based data) in accordance with user instructions.

In conjunction with touch screen 112, display system controller 156, contact module 130, graphics module 132, audio circuitry 110, speaker 111, RF circuitry 108, text input module 134, e-mail client module 140, and browser module 147, online video module 155 includes instructions that allow the user to access, browse, receive (e.g., by streaming and/or download), play back (e.g., on the touch screen or on an external, connected display via external port 124), send an e-mail with a link to a particular online video, and otherwise manage online videos in one or more file formats, such as H.264. In some embodiments, instant messaging module 141, rather than e-mail client module 140, is used to send a link to a particular online video. Additional description of the online video application can be found in U.S. Provisional Patent Application No. 60/936,562 , "Portable Multifunction Device, Method, and Graphical User Interface for Playing Online Videos," filed June 20, 2007, and U.S. Patent Application No. 11/968,067 , "Portable Multifunction Device, Method, and Graphical User Interface for Playing Online Videos," filed December 31, 2007.

As discussed further in the discussion of Figure 3, the keyboard configuration module 160 determines keyboard layouts from hardware and software sources associated with the device 100.

Each of the above identified modules and applications correspond to a set of executable instructions for performing one or more functions described above and the methods described in this application (e.g., the computer-implemented methods and other information processing methods described herein). These modules (i.e., sets of instructions) need not be implemented as separate software programs, procedures or modules, and thus various subsets of these modules may be combined or otherwise re-arranged in various embodiments. For example, video player module 145 may be combined with music player module 146 into a single module (e.g., video and music player module 152, Figure 1B). In some embodiments, memory 102 may store a subset of the modules and data structures identified above. Furthermore, memory 102 may store additional modules and data structures not described above.

In some embodiments, the device 100 is a device where operation of a predefined set of functions on the device is performed through a touch screen 112 and/or a physical keyboard. For example, text entry can be done through an on screen keyboard or through a physical keyboard. By using a touch screen and/or a physical keyboard as the input control devices for operation of the device 100, a user has more flexibility with respect to input methods.

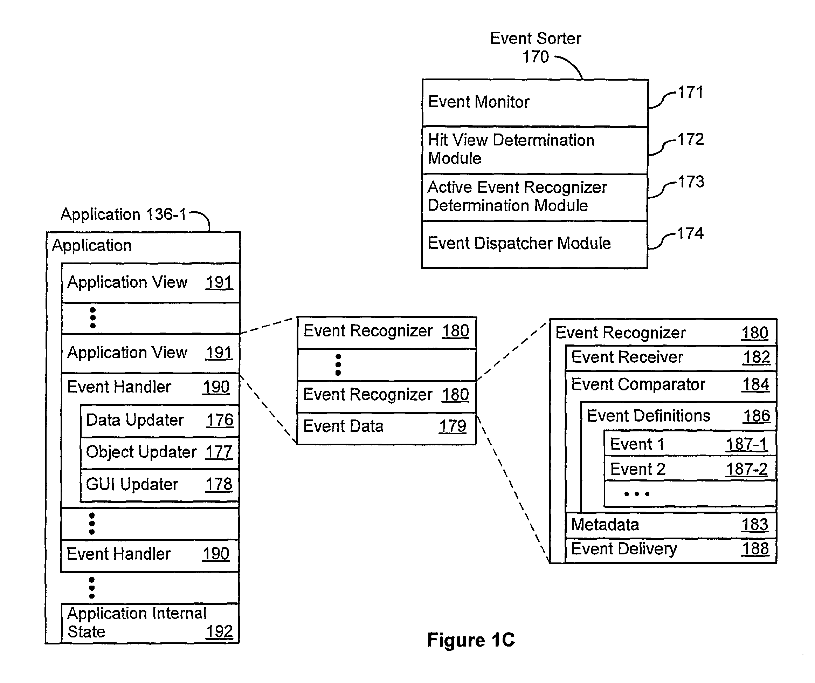

Figure 1C is a block diagram illustrating exemplary components for event handling in accordance with some embodiments. In some embodiments, memory 102 (in Figures 1A and 1B) or 370 (Figure 3) includes event sorter 170 (e.g., in operating system 126) and a respective application 136-1 (e.g., any of the aforementioned applications 137-151, 155, 380-390).

Event sorter 170 receives event information and determines the application 136-1 and application view 191 of application 136-1 to which to deliver the event information. Event sorter 170 includes event monitor 171 and event dispatcher module 174. In some embodiments, application 136-1 includes application internal state 192, which indicates the current application view(s) displayed on touch sensitive display 112 when the application is active or executing. In some embodiments, device/global internal state 157 is used by event sorter 170 to determine which application(s) is(are) currently active, and application internal state 192 is used by event sorter 170 to determine application views 191 to which to deliver event information.

In some embodiments, application internal state 192 includes additional information, such as one or more of: resume information to be used when application 136-1 resumes execution, user interface state information that indicates information being displayed or that is ready for display by application 136-1, a state queue for enabling the user to go back to a prior state or view of application 136-1, and a redo/undo queue of previous actions taken by the user.

Event monitor 171 receives event information from peripherals interface 118. Event information includes information about a sub-event (e.g., a user touch on touch-sensitive display 112, as part of a multi-touch gesture). Peripherals interface 118 transmits information it receives from I/O subsystem 106 or a sensor, such as proximity sensor 166, accelerometer(s) 168, and/or microphone 113 (through audio circuitry 110). Information that peripherals interface 118 receives from I/O subsystem 106 includes information from touch-sensitive display 112 or a touch-sensitive surface.

In some embodiments, event monitor 171 sends requests to the peripherals interface 118 at predetermined intervals. In response, peripherals interface 118 transmits event information. In other embodiments, peripheral interface 118 transmits event information only when there is a significant event (e.g., receiving an input beyond a predetermined noise threshold and/or for more than a predetermined duration).

In some embodiments, event sorter 170 also includes a hit view determination module 172 and/or an active event recognizer determination module 173.

Hit view determination module 172 provides software procedures for determining where a sub-event has taken place within one or more views, when touch sensitive display 112 displays more than one view. Views are made up of controls and other elements that a user can see on the display.

Another aspect of the user interface associated with an application is a set views, sometimes herein called application views or user interface windows, in which information is displayed and touch-based gestures occur. The application views (of a respective application) in which a touch is detected may correspond to programmatic levels within a programmatic or view hierarchy of the application. For example, the lowest level view in which a touch is detected may be called the hit view, and the set of events that are recognized as proper inputs may be determined based, at least in part, on the hit view of the initial touch that begins a touch-based gesture.

Hit view determination module 172 receives information related to sub-events of a touch-based gesture. When an application has multiple views organized in a hierarchy, hit view determination module 172 identifies a hit view as the lowest view in the hierarchy which should handle the sub-event. In most circumstances, the hit view is the lowest level view in which an initiating sub-event occurs (i.e., the first sub-event in the sequence of sub-events that form an event or potential event). Once the hit view is identified by the hit view determination module, the hit view typically receives all sub-events related to the same touch or input source for which it was identified as the hit view.

Active event recognizer determination module 173 determines which view or views within a view hierarchy should receive a particular sequence of sub-events. In some embodiments, active event recognizer determination module 173 determines that only the hit view should receive a particular sequence of sub-events. In other embodiments, active event recognizer determination module 173 determines that all views that include the physical location of a sub-event are actively involved views, and therefore determines that all actively involved views should receive a particular sequence of sub-events. In other embodiments, even if touch sub-events were entirely confined to the area associated with one particular view, views higher in the hierarchy would still remain as actively involved views.

Event dispatcher module 174 dispatches the event information to an event recognizer (e.g., event recognizer 180). In embodiments including active event recognizer determination module 173, event dispatcher module 174 delivers the event information to an event recognizer determined by active event recognizer determination module 173. In some embodiments, event dispatcher module 174 stores in an event queue the event information, which is retrieved by a respective event receiver module 182.

In some embodiments, operating system 126 includes event sorter 170. Alternatively, application 136-1 includes event sorter 170. In yet other embodiments, event sorter 170 is a stand-alone module, or a part of another module stored in memory 102, such as contact/motion module 130.

In some embodiments, application 136-1 includes a plurality of event handlers 190 and one or more application views 191, each of which includes instructions for handling touch events that occur within a respective view of the application's user interface. Each application view 191 of the application 136-1 includes one or more event recognizers 180. Typically, a respective application view 191 includes a plurality of event recognizers 180.
In other embodiments, one or more of event recognizers 180 are part of a separate module, such as a user interface kit (not shown) or a higher level object from which application 136-1 1 inherits methods and other properties. In some embodiments, a respective event handler 190 includes one or more of: data updater 176, object updater 177, GUI updater 178, and/or event data 179 received from event sorter 170. Event handler 190 may utilize or call data updater 176, object updater 177 or GUI updater 178 to update the application internal state 192. Alternatively, one or more of the application views 191 includes one or more respective event handlers 190. Also, in some embodiments, one or more data updater 176, object updater 177, and GUI updater 178 are included in a respective application view 191.

A respective event recognizer 180 receives event information (e.g., event data 179) from event sorter 170, and identifies an event from the event information. Event recognizer 180 includes event receiver 182 and event comparator 184. In some embodiments, event recognizer 180 also includes at least a subset of: metadata 183, and event delivery instructions 188 (which may include sub-event delivery instructions).

Event receiver 182 receives event information from the event sorter 170. The event information includes information about a sub-event, for example, a touch or a touch movement. Depending on the sub-event, the event information also includes additional information, such as location of the sub-event. When the sub-event concerns motion of a touch the event information may also include speed and direction of the sub-event. In some embodiments, events include rotation of the device from one orientation to another (e.g., from a portrait orientation to a landscape orientation, or vice versa), and the event information includes corresponding information about the current orientation (also called device attitude) of the device.

Event comparator 184 compares the event information to predefined event or sub-event definitions and, based on the comparison, determines an event or sub-event, or determines or updates the state of an event or sub-event. In some embodiments, event comparator 184 includes event definitions 186. Event definitions 186 contain definitions of events (e.g., predefined sequences of sub-events), for example, event 1 (187-1), event 2 (187-2), and others. In some embodiments, sub-events in an event 187 include, for example, touch begin, touch end, touch movement, touch cancellation, and multiple touching. In one example, the definition for event 1 (187-1) is a double tap on a displayed object. The double tap, for example, comprises a first touch (touch begin) on the displayed object for a predetermined phase, a first lift-off (touch end) for a predetermined phase, a second touch (touch begin) on the displayed object for a predetermined phase, and a second lift-off (touch end) for a predetermined phase. In another example, the definition for event 2 (187-2) is a dragging on a displayed object. The dragging, for example, comprises a touch (or contact) on the displayed object for a predetermined phase, a movement of the touch across touch-sensitive display 112, and lift-off of the touch (touch end). In some embodiments, the event also includes information for one or more associated event handlers 190.

In some embodiments, event definition 187 includes a definition of an event for a respective user-interface object. In some embodiments, event comparator 184 performs a hit test to determine which user-interface object is associated with a sub-event. For example, in an application view in which three user-interface objects are displayed on touch-sensitive display 112, when a touch is detected on touch-sensitive display 112, event comparator 184 performs a hit test to determine which of the three user-interface objects is associated with the touch (sub-event). If each displayed object is associated with a respective event handler 190, the event comparator uses the result of the hit test to determine which event handler 190 should be activated. For example, event comparator 184 selects an event handler associated with the sub-event and the object triggering the hit test.

In some embodiments, the definition for a respective event 187 also includes delayed actions that delay delivery of the event information until after it has been determined whether the sequence of sub-events does or does not correspond to the event recognizer's event type.

When a respective event recognizer 180 determines that the series of sub-events do not match any of the events in event definitions 186, the respective event recognizer 180 enters an event impossible, event failed, or event ended state, after which it disregards subsequent sub-events of the touch-based gesture. In this situation, other event recognizers, if any, that remain active for the hit view continue to track and process sub-events of an ongoing touch-based gesture.

In some embodiments, a respective event recognizer 180 includes metadata 183 with configurable properties, flags, and/or lists that indicate how the event delivery system should perform sub-event delivery to actively involved event recognizers. In some embodiments, metadata 183 includes configurable properties, flags, and/or lists that indicate how event recognizers may interact with one another. In some embodiments, metadata 183 includes configurable properties, flags, and/or lists that indicate whether sub-events are delivered to varying levels in the view or programmatic hierarchy.

In some embodiments, a respective event recognizer 180 activates event handler 190 associated with an event when one or more particular sub-events of an event are recognized. In some embodiments, a respective event recognizer 180 delivers event information associated with the event to event handler 190. Activating an event handler 190 is distinct from sending (and deferred sending) sub-events to a respective hit view. In some embodiments, event recognizer 180 throws a flag associated with the recognized event, and event handler 190 associated with the flag catches the flag and performs a predefined process.

In some embodiments, event delivery instructions 188 includes sub-event delivery instructions that deliver event information about a sub-event without activating an event handler. Instead, the sub-event delivery instructions deliver event information to event handlers associated with the series of sub-events or to actively involved views. Event handlers associated with the series of sub-events or with actively involved views receive the event information and perform a predetermined process.

In some embodiments, data updater 176 creates and updates data used in application 136-1. For example, data updater 176 updates the telephone number used in contacts module 137, or stores a video file used in video player module 145. In some embodiments, object updater 177 creates and updates objects used in application 136-1. For example, object updater 176 creates a new user-interface object or updates the position of a user-interface object. GUI updater 178 updates the GUI. For example, GUI updater 178 prepares display information and sends it to graphics module 132 for display on a touch-sensitive display.

In some embodiments, event handler(s) 190 includes or has access to data updater 176, object updater 177, and GUI updater 178. In some embodiments, data updater 176, object updater 177, and GUI updater 178 are included in a single module of a respective application 136-1 or application view 191. In other embodiments, they are included in two or more software modules.

It shall be understood that the foregoing discussion regarding event handling of user touches on touch-sensitive displays also applies to other forms of user inputs to operate multifunction devices 100 with input-devices, not all of which are initiated on touch screens, e.g., coordinating mouse movement and mouse button presses with or without single or multiple keyboard presses or holds, user movements taps, drags, scrolls, etc., on touchpads, pen stylus inputs, movement of the device, oral instructions, detected eye movements, biometric inputs, and/or any combination thereof, which may be utilized as inputs corresponding to sub-events which define an event to be recognized.

Figure 2 illustrates a portable multifunction device 100 having a touch screen 112 in accordance with some embodiments. The touch screen may display one or more graphics within user interface (UI) 200. In this embodiment, as well as others described below, a user may select one or more of the graphics by making contact or touching the graphics, for example, with one or more fingers 202 (not drawn to scale in the figure) or one or more styluses 203 (not drawn to scale in the figure). In some embodiments, selection of one or more graphics occurs when the user breaks contact with the one or more graphics. In some embodiments, the contact may include a gesture, such as one or more taps, one or more swipes (from left to right, right to left, upward and/or downward) and/or a rolling of a finger (from right to left, left to right, upward and/or downward) that has made contact with device 100. In some embodiments, inadvertent contact with a graphic may not select the graphic. For example, a swipe gesture that sweeps over an application icon may not select the corresponding application when the gesture corresponding to selection is a tap.

Device 100 may also include one or more physical buttons, such as "home" or menu button 204. As described previously, menu button 204 may be used to navigate to any application 136 in a set of applications that may be executed on device 100. Alternatively, in some embodiments, the menu button is implemented as a soft key in a GUI displayed on touch screen 112.

In one embodiment, device 100 includes touch screen 112, menu button 204, push button 206 for powering the device on/off and locking the device, volume adjustment button(s) 208, Subscriber Identity Module (SIM) card slot 210, head set jack 212, and docking/charging external port 124. Push button 206 may be used to turn the power on/off on the device by depressing the button and holding the button in the depressed state for a predefined time interval; to lock the device by depressing the button and releasing the button before the predefined time interval has elapsed; and/or to unlock the device or initiate an unlock process. In an alternative embodiment, device 100 also may accept verbal input for activation or deactivation of some functions through microphone 113.

Figure 2 illustrates a portable multifunction device 100 having a touch screen 112 and a hardware keyboard 250 in accordance with some embodiments. In some embodiments, the touch screen may display input from the hardware keyboard 250. The touch screen may display one or more graphics within user interface (UI) 200. In this embodiment, as well as others described below, a user may select one or more of the graphics by making contact or touching the graphics, for example, with one or more fingers 202 (not drawn to scale in the figure) or one or more styluses 203 (not drawn to scale in the figure). In some embodiments, selection of one or more graphics occurs when the user breaks contact with the one or more graphics. In some embodiments, the contact may include a gesture, such as one or more taps, one or more swipes (from left to right, right to left, upward and/or downward) and/or a rolling of a finger (from right to left, left to right, upward and/or downward) that has made contact with the device 100. In some embodiments, inadvertent contact with a graphic may not select the graphic. For example, a swipe gesture that sweeps over an application icon may not select the corresponding application when the gesture corresponding to selection is a tap.

The device 100 may also include one or more physical buttons, such as "home" or menu button 204. As described previously, the menu button 204 may be used to navigate to any application 136 in a set of applications that may be executed on the device 100. Alternatively, in some embodiments, the menu button is implemented as a soft key in a GUI in touch screen 112.

In one embodiment, the device 100 includes a touch screen 112, a menu button 204, a push button 206 for powering the device on/off and locking the device, volume adjustment button(s) 208, a Subscriber Identity Module (SIM) card slot 210, a head set jack 212, and a docking/charging external port 124. The push button 206 may be used to turn the power on/off on the device by depressing the button and holding the button in the depressed state for a predefined time interval; to lock the device by depressing the button and releasing the button before the predefined time interval has elapsed; and/or to unlock the device or initiate an unlock process. In an alternative embodiment, the device 100 also may accept verbal input for activation or deactivation of some functions through the microphone 113.

The keys of the hardware keyboard 250 may be in any layout or language such as QWERTY, AZERTY and Dvorak, including variants for different countries (such as French and Belgian AZERTY keyboard layouts). The Portable Multifunction device 100 is configured to accept input from the hardware keyboard 250 corresponding to the layout and language of the hardware keyboard.

Figure 3 is a block diagram of an exemplary multifunction device with a display and a touch-sensitive surface in accordance with some embodiments. Device 300 need not be portable. In some embodiments, the device 300 is a laptop computer, a desktop computer, a tablet computer, a multimedia player device, a navigation device, an educational device (such as a child's learning toy), a gaming system, or a control device (e.g., a home or industrial controller). The device 300 typically includes one or more processing units (CPU's) 310, one or more network or other communications interfaces 360, memory 370, and one or more communication buses 320 for interconnecting these components. The communication buses 320 may include circuitry (sometimes called a chipset) that interconnects and controls communications between system components. The device 300 includes an input/output (I/O) interface 330 comprising a display 340, which is typically a touch screen display. The I/O interface 330 also may include a keyboard 250, a mouse (or other pointing device) 350 and a touchpad 355. They keyboard is connected to the device 300 through a wired or wireless connection (e.g., Bluetooth). The wired connection may be through a docking station. Memory 370 includes high-speed random access memory, such as DRAM, SRAM, DDR RAM or other random access solid state memory devices; and may include non-volatile memory, such as one or more magnetic disk storage devices, optical disk storage devices, flash memory devices, or other non-volatile solid state storage devices. Memory 370 may optionally include one or more storage devices remotely located from the CPU(s) 310. In some embodiments, memory 370 stores programs, modules, and data structures analogous to the programs, modules, and data structures stored in the memory 102 of portable multifunction device 100 (Figure 1), or a subset thereof. In some embodiments, memory 370 or the computer readable storage medium of memory 370 store the following programs, modules and data structures, or a subset thereof including: an operating system 126, a communication module 128, a GPS module 135, a text input module 134, a video player module 145, a music player module 146, a keyboard configuration module 160 and a configuration database 370.

The operating system 126 includes procedures for handling various basic system services and for performing hardware dependent tasks.

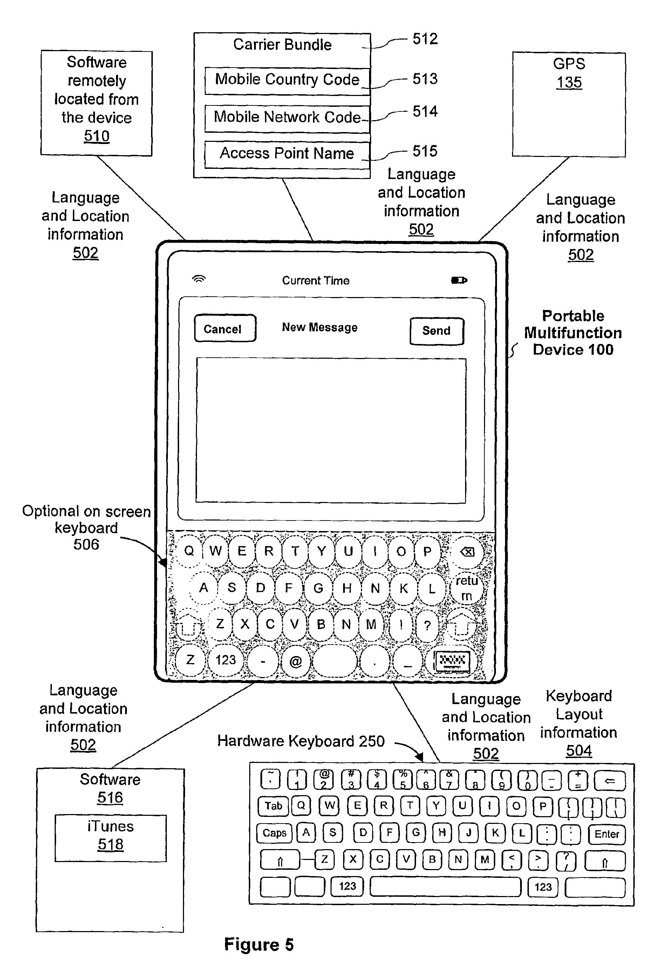

The communication module 128 facilitates communication with other devices via the one or more communication network interfaces 360 (wired or wireless) and one or more communication networks, such as the Internet, other wide area networks, local area networks, metropolitan area networks, cellular networks, and so on. In some embodiments, the communication module 128 includes carrier bundle data 129. In some embodiments, carrier bundle data is obtained by the communication module 128 though communication with a cellular network. In some embodiments, carrier bundle data 129 is obtained from the network interface 135. The carrier bundle data includes mobile country code 192, mobile network code 193 and access point name 194 which are discussed in further detail in the discussion of Figure 5.

The GPS module 135 determines the location of the device and provides this information for use in various applications. The GPS module 135 includes GPS data 175. The GPS data includes the location of the device 300.

The text input module 134 provides soft keyboards or on-screen keyboards for entering text in various applications (e.g., contacts 137, e-mail 140, IM 141, browser 147, and any other application that needs text input).

The video player module 145 plays video files. The video player module 145 includes language and location data 176 a user of the device 300. The user's language and location information may in the video player module's 145 preferences or in a user account associated with the module 145. In some embodiments, the language and location data 176 is user entered.

The music player module 146 plays music files. The music player module 146 includes language and location data 177 associated with a user of the device 300. The user's language and location information may in the music player module's 146 preferences or in a user account associated with the module 146. In some embodiments, the language and location data 177 is user entered.

The keyboard configuration module 160 determines keyboard layouts. In some embodiments, the keyboard configuration module 160 includes language and location data 161 obtained from hardware and software sources associated with the device 300. The keyboard configuration module 160 prioritizes the one or more sources based on the reliability of the source. The language and location data from highest rated or most reliable source is used to determine a keyboard layout. In some embodiments, the keyboard configuration module 160 uses configuration mappings 372 stored in the configuration database 370 to determine a keyboard layout. The configuration mappings 372 map language and location information to keyboard layouts. For example, a mapping 374-1, may map language English and location US maps to a QWERTY keyboard layout.

In some embodiments, the keyboard configuration module 160 configures the device 300 to interpret signals from a hardware keyboard 250 in accordance with the determined layout. In some embodiments, the configuration module 160 retrieves hardware keyboard layout configurations 372 from the configuration data base 370 and uses the configuration 372 to configure the hardware keyboard 250.

In some embodiments, the keyboard configuration module 160 configures the layout of an on-screen keyboard in accordance with the determined layout. In some embodiments, the configuration module 160 retrieves an on-screen keyboard layout configuration 376 from the configuration database 370 and uses the configuration to configure the layout of the on-screen keyboard.

The configuration database 370 stores configuration mappings 372, on-screen keyboard layout configurations 376 and hardware keyboard layout configurations 197. The configuration mappings 372 include all possible mappings of language and location information to keyboard layouts. For example, a mapping 374-1, may map language English and location US maps to a QWERTY keyboard layout. In another example, a mapping, may map language French and location Canada to a Canadian Multilingual Standard or Canadian French keyboard layout. It is noted that the configuration database 370, configuration mappings 372, on-screen keyboard layout configurations 376 and the hardware keyboard layout configurations 380 may be stored on a server remotely located from the device 300.

The on-screen keyboard layout configurations 376 includes keyboard layout configurations 196 for an on-screen keyboard. The keyboard layout configurations 196 correspond to any language and layout. For example, a configuration 378-1 may correspond to a QWERTY keyboard layout. In some embodiments, the on-screen keyboard layout configurations 376 include a default layout configuration. In some embodiments, the on-screen keyboard layout configurations 376 include user created layouts. In some embodiments, the configurations 376 include flags that indicate whether a respective configuration has been selected by a user, inferred from language and location information or is a default layout.

The hardware keyboard layout configurations 380 includes all possible hardware keyboard layout configurations 380. The hardware keyboard layout configurations 380 correspond to any language and layout. For example, a configuration 382-2, may corresponds to a AZERTY keyboard layout. In some embodiments, the hardware keyboard layout configurations 380 include a default layout. In some embodiments, the on hardware keyboard layout configurations 380 include user created layouts. In some embodiments, the configurations 382 include flags that indicate whether a respective configuration 382 has been selected by a user, inferred from language and location information or is a default layout.

Each of the above identified elements in Figure 3 may be stored in one or more of the previously mentioned memory devices. Each of the above identified modules corresponds to a set of instructions for performing a function described above. The above identified modules or programs (i.e., sets of instructions) need not be implemented as separate software programs, procedures or modules, and thus various subsets of these modules may be combined or otherwise re-arranged in various embodiments. In some embodiments, memory 370 may store a subset of the modules and data structures identified above. Furthermore, memory 370 may store additional modules and data structures not described above.

Attention is now directed towards embodiments of user interfaces ("UI") that may be implemented on a portable multifunction device 100.

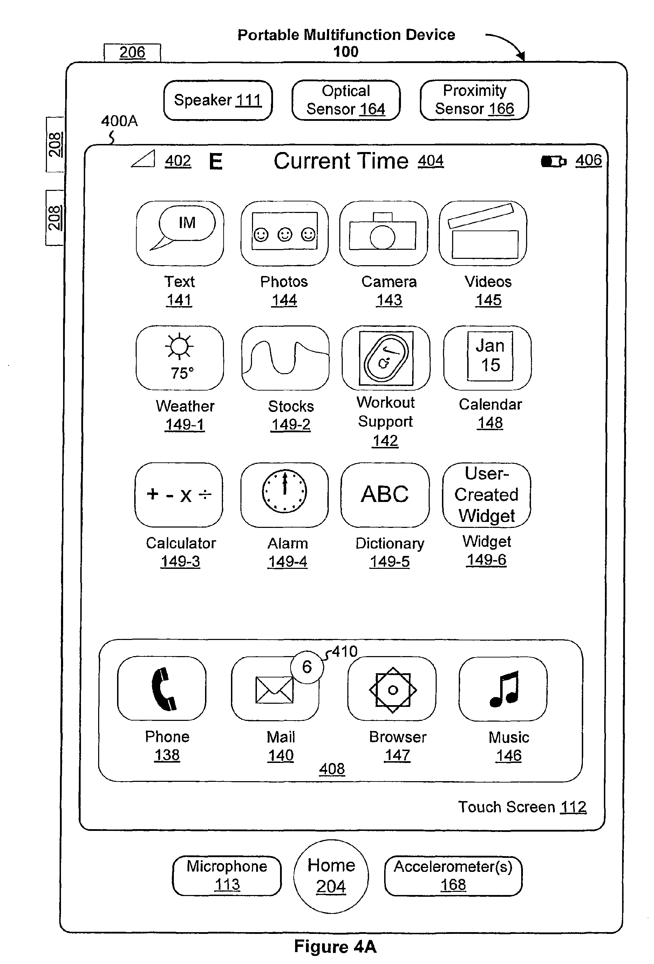

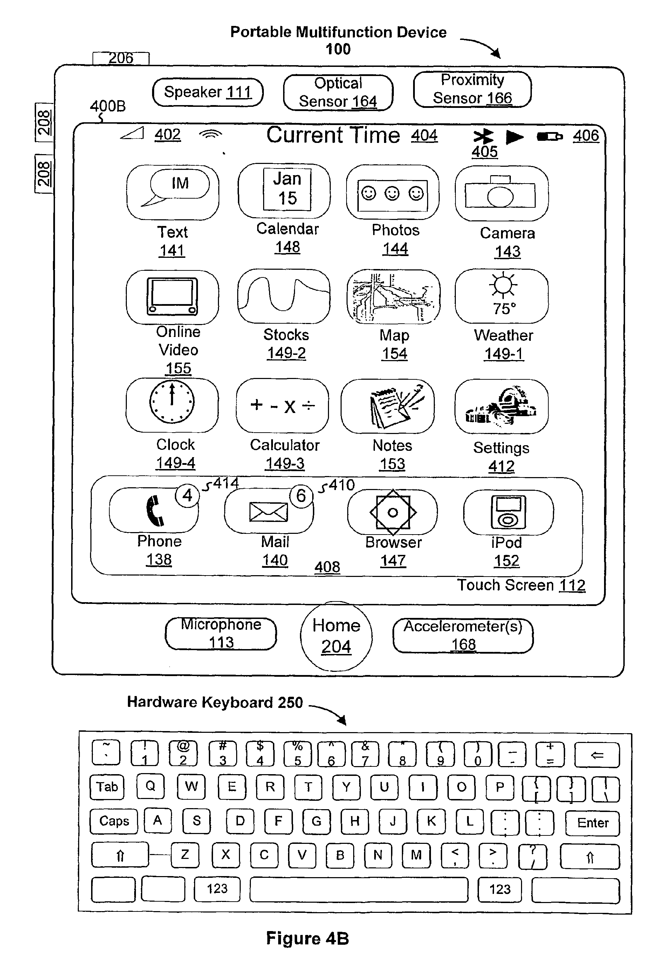

Figures 4A and 4B illustrate exemplary user interfaces for a menu of applications on a portable multifunction device 100 and a hardware keyboard 250 in accordance with some embodiments. Similar user interfaces may be implemented on device 300. In some embodiments, user interface 400A includes the following elements, or a subset or superset thereof:
- Signal strength indicator(s) 402 for wireless communication(s), such as cellular and Wi-Fi signals;
- Time 404;
- Bluetooth indicator 405;
- Battery status indicator 406;
- Tray 408 with icons for frequently used applications, such as:
   o Phone 138, which may include an indicator 414 of the number of missed calls or voicemail messages;
   o E-mail client 140, which may include an indicator 410 of the number of unread e-mails;
   o Browser 147; and
   o Music player 146; and
- Icons for other applications, such as:
   o IM 141;
   o Image management 144;
   o Camera 143;
   o Video player 145;
   o Weather 149-1;
   o Stocks 149-2;
   o Workout support 142;
   o Calendar 148;
   o Calculator 149-3;
   o Alarm clock 149-4;
   o Dictionary 149-5; and
   o User-created widget 149-6.

In some embodiments, user interface 400B includes the following elements, or a subset or superset thereof:
- 402, 404, 405, 406, 141, 148, 144, 143, 149-3, 149-2, 149-1, 149-4, 410, 414, 138, 140, and 147, as described above;
- Map 154;
- Notes 153;
- Settings 412, which provides access to settings for the device 100 and its various applications 136, as described further below;
- Video and music player module 152, also referred to as iPod (trademark of Apple Inc.) module 152; and
- Online video module 155, also referred to as YouTube (trademark of Google, Inc.) module 155.

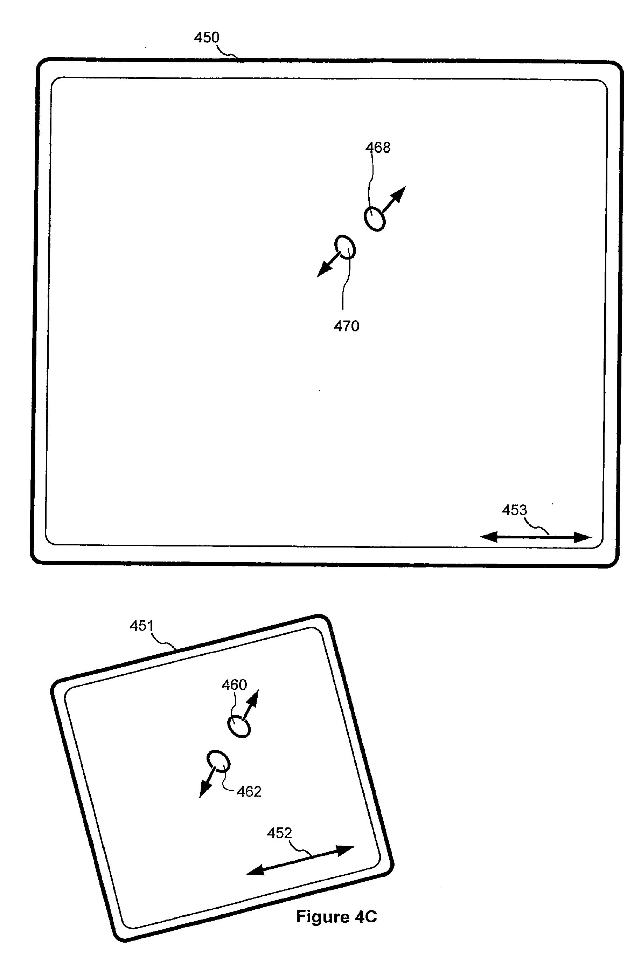

Figure 4C illustrates an exemplary user interface on a device (e.g., device 300, Figure 3) with a touch-sensitive surface 451 (e.g., a tablet or touchpad 355, Figure 3) that is separate from the display 450 (e.g., touch screen display 112). Although many of the examples which follow will be given with reference to inputs on touch screen display 112 (where the touch sensitive surface and the display are combined), in some embodiments, the device detects inputs on a touch-sensitive surface that is separate from the display, as shown in Figure 4C. In some embodiments the touch sensitive surface (e.g., 451 in Figure 4C) has a primary axis (e.g., 452 in Figure 4C) that corresponds to a primary axis (e.g., 453 in Figure 4C) on the display (e.g., 450). In accordance with these embodiments, the device detects contacts (e.g., 460 and 462 in Figure 4C) with the touch-sensitive surface 451 at locations that correspond to respective locations on the display (e.g., in Figure 4C 460 corresponds to 468 and 462 corresponds to 470). In this way, user inputs (e.g., contacts 460 and 462) detected by the device on the touch-sensitive surface (e.g., 451 in Figure 4C) are used by the device to manipulate the user interface on the display (e.g., 450 in Figure 4C) of the multifunction device when the touch-sensitive surface is separate from the display. It should be understood that similar methods may be used for other user interfaces described herein.

Attention is now directed towards Figure 5 which illustrates a block diagram of a portable multifunction device 100 (with optional on screen keyboard 506) and sources of language and location information in accordance with some embodiments. Language information refers to written or spoken language such as English, German or French. Location refers to geographic location and includes city, state, region and country. Depending on the source, the location information may be for the device, for a user associated with the device or for an intended location of the device. The sources of language and location information include software 510 remotely located from the portable multifunction device, carrier bundle 512, GPS 135, software 516 and a hardware keyboard 250. As described in more detail below, a keyboard layout is determined from the language and location information from one or more of the sources.

Information obtained from the hardware keyboard 250 may be considered the most reliable for determining the layout of the hardware keyboard 250 because it provides the strongest indication of a user's preferred keyboard layout. For example, if a user uses a QWERTY keyboard it can be inferred that the user prefers to input text in English and prefers a QWERTY keyboard layout. In some embodiments, the hardware keyboard 250 includes keyboard layout information 504. The keyboard layout information 504 includes the language and the physical layout of the keys. Stated in another way, the keyboard layout information 504 includes the visual appearance of the keyboard and the functional meaning of each key. For example, they keyboard layout information 504 may specify that the hardware keyboard 250 is an English QWERTY keyboard. In some embodiments, the hardware keyboard 250 only includes language and/or location information 502. For example, the language may be French and the location may be Canada. Many hardware keyboards do not provide complete configuration information, therefore in many situations it is necessary to consult other hardware and software information sources as to device location and language used to determine a keyboard layout.

In some embodiments, language information and location information 502 associated with a user of the portable multifunction device 100 is obtained from one or more software modules 516 and 510. The software modules provide clues as to the user's location and preferred language. In some embodiments, one or more software modules 516 are located on the portable multifunction device 100. In some embodiments, one or more software modules 510 are remotely located from the portable multifunction device 100. In some embodiments, software 516 includes a media player software such as iTunes 518. The language and location information is obtained from user entered information in preferences, settings, options, accounts and profiles associated with the software modules 516 and 510. For example, a user's location and language information may be obtained from the user's iTunes profile/account on a server remotely located from the portable multifunction device 100.

In some embodiments, language and location information 502 associated with a user of the portable multifunction device 100 is obtained or derived from the carrier bundle 512 of the portable multifunction device 100. The carrier bundle 512 includes settings and information for the portable multifunction device's 100 connection with a cellular telephone network. In some embodiments, the carrier bundle 512 includes a mobile country code 513, mobile network code 514 and access point name 515. The access point name 515 identifies a packet data network that portable multifunction device 100 connects to. The packet data network is responsible for providing data connectivity to the mobile device. In some embodiments, the language and location information 502 is derived from the access point name 515 or by accessing one or more resources through the access point name 515. In some embodiments, the language and location information 502 is derived from the mobile country code 513. For example, mobile country code "466" corresponds to Taiwan. In some embodiments, the mobile network code 514 in combination with the mobile country code identifies a mobile phone operator/carrier. For example, a mobile country code "505" in combination with mobile network code "01" identifies the carrier Telstra in Australia.

In some embodiments, language and location information 502 of a user or the portable multifunction device 100 is obtained from the GPS module 135.

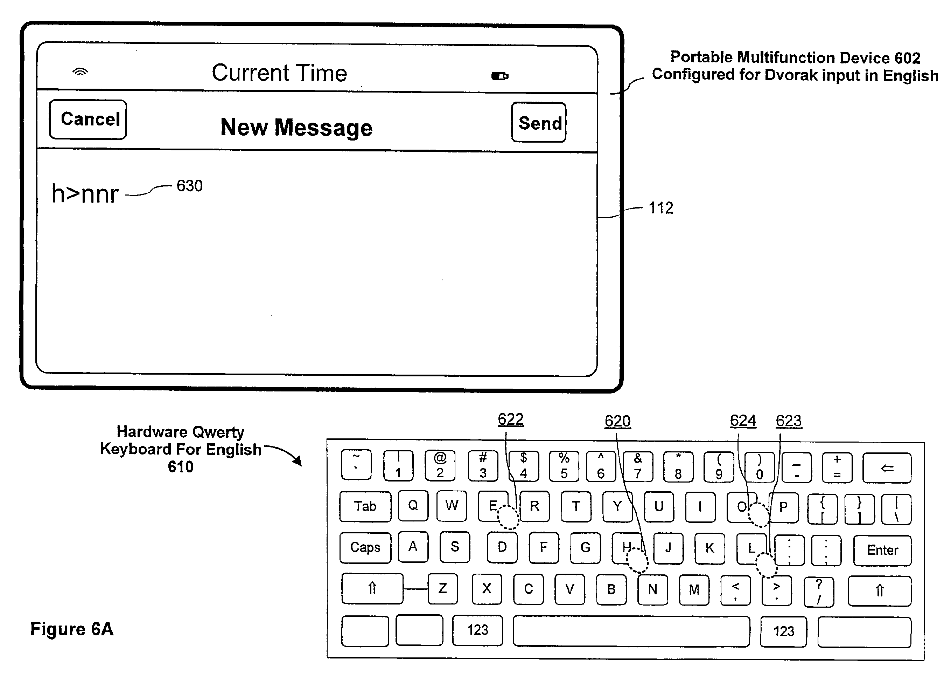

Figures 6A-6D illustrate hardware keyboard input displayed on a portable multifunction device 100 in accordance with some embodiments.

Figure 6A illustrates a potable multifunction device 602 that is misconfigured for interpreting input from a QWERTY keyboard 610. The portable multifunction device 100 is configured to accept input from a Dvorak keyboard while the hardware keyboard 610 has a QWERTY layout. As a result, the output 630 "h>nnr" displayed on the display device 112 matches the user QWERTY keyboard input sequence (i.e., 620, 622, 623, 623 and 624) which corresponds to "hello."

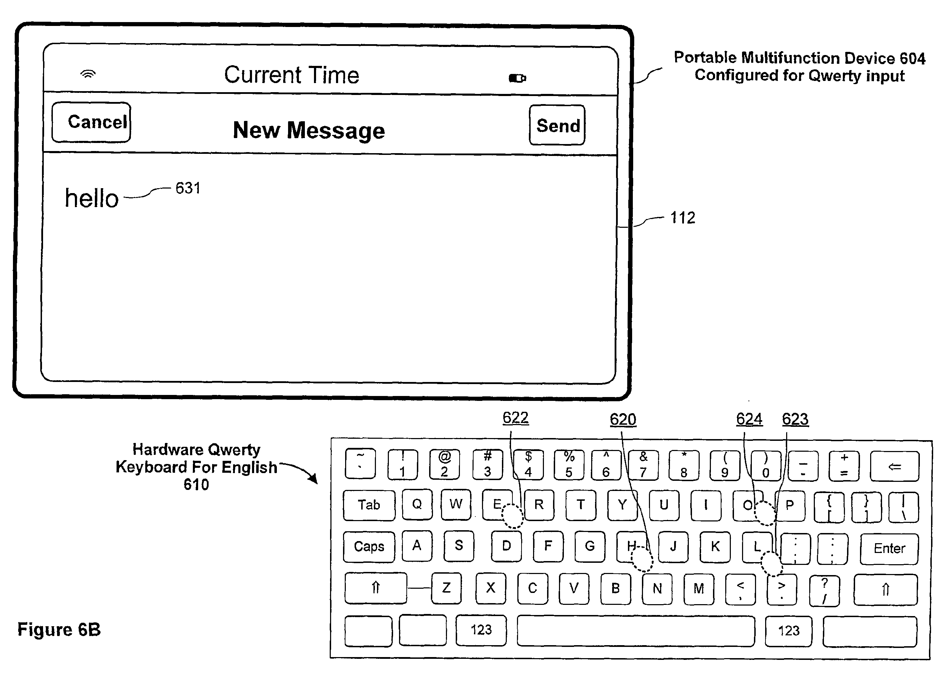

Figure 6B illustrates a portable multifunction device 604 that is properly configured for interpreting input from a QWERTY keyboard 610. As shown in Figure 6B, the output 631 displayed on the display device 112 matches the QWERTY keyboard input sequence (i.e., 620, 622, 623, 623 and 624) which corresponds to "hello."

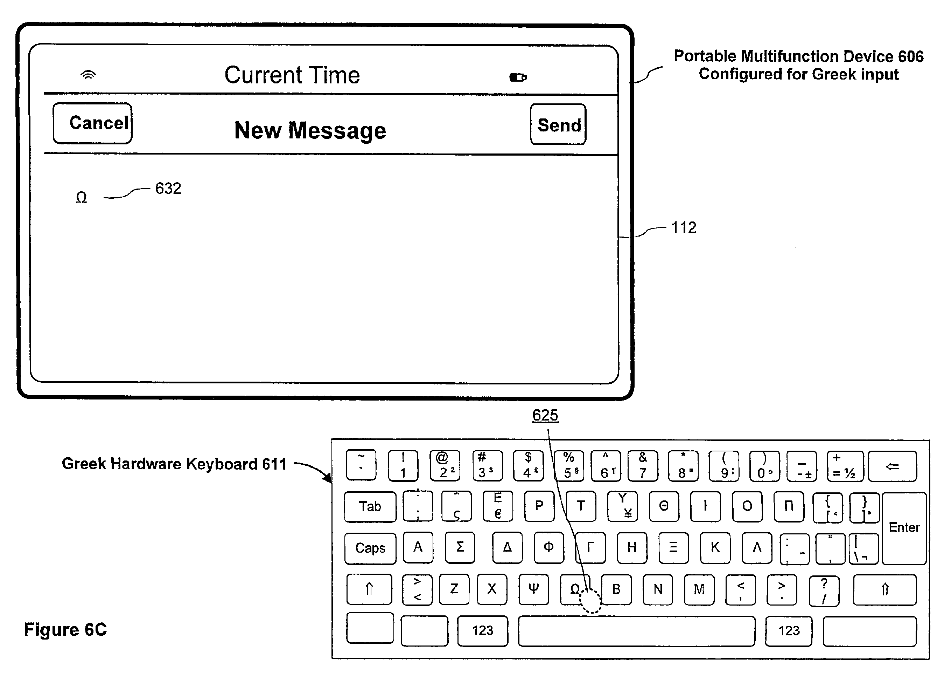

Figure 6C illustrates a portable multifunction device 606 that is configured to interpret input from a Greek keyboard 611. As shown in Figure 6C, the text output 632 displayed on the display device 112 corresponds to the key pressed 625 on the Greek keyboard 611.

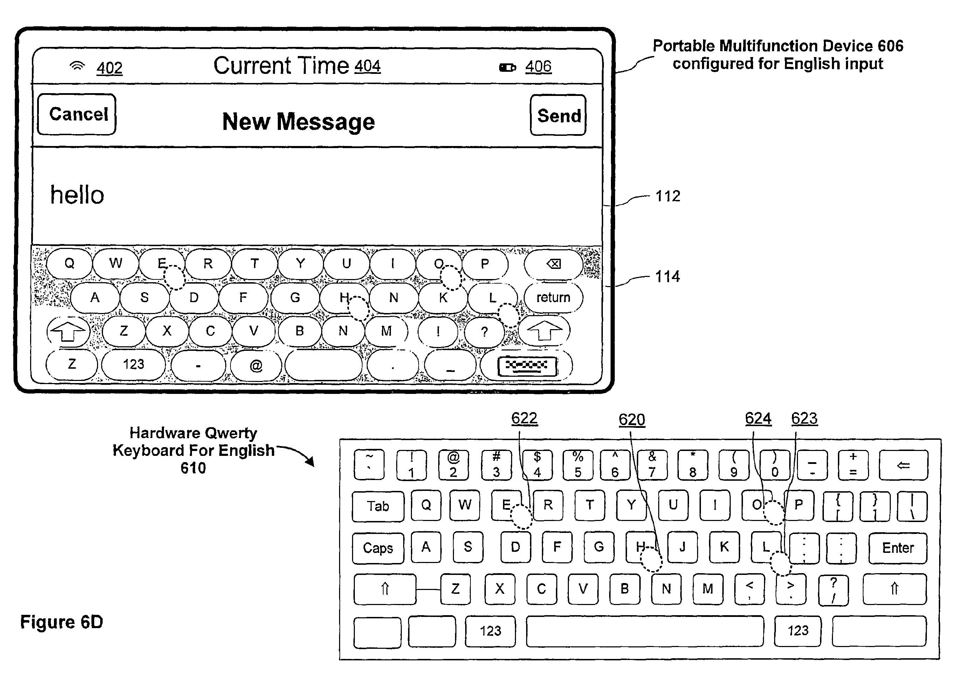

Figure 6D illustrates a portable multifunction 606 configured to display an on screen keyboard 114 that visually corresponds a QWERTY keyboard. In some embodiments, device 606 is configured to accept input from both the on-screen keyboard 114 and the hardware keyboard 610. In some embodiments, the device 606 is configured to accept input from only the on-screen keyboard 114 or the hardware keyboard 610. In some embodiments, the on-screen keyboard highlights or provides a visual indication that a key of the on-screen has been pressed when the corresponding key has been pressed on the QWERTY keyboard 610.

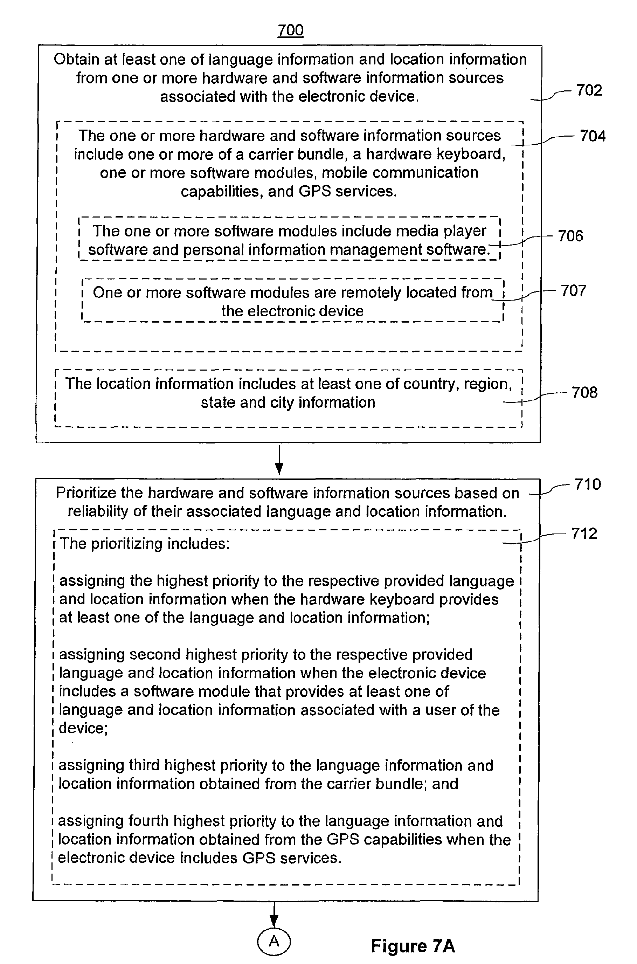

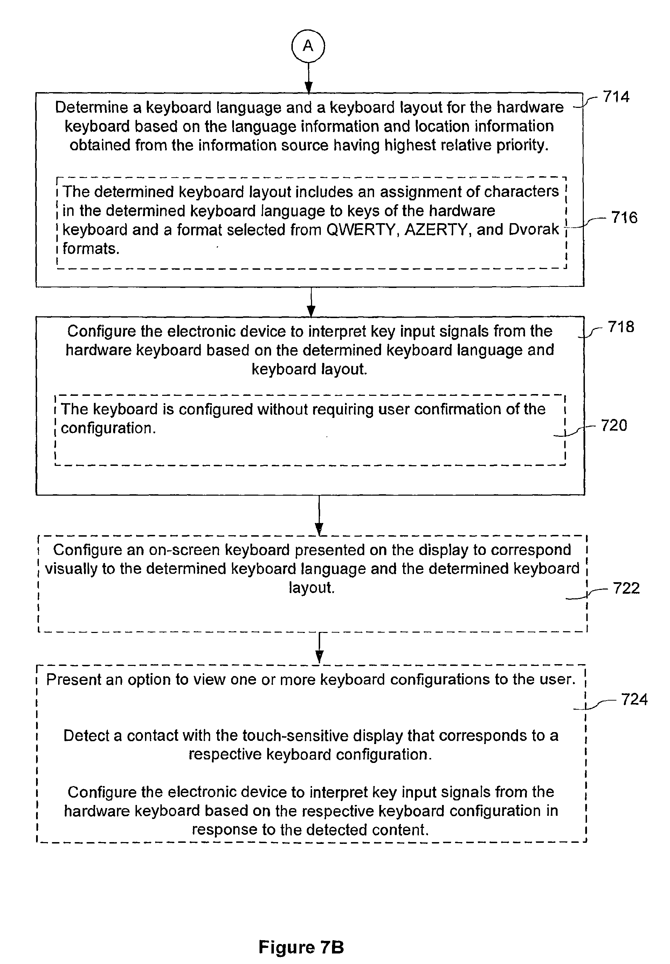

Figures 7A and 7B are flow diagrams illustrating a method 700 of automatically determining a keyboard language and layout in accordance with some embodiments. The method 700 is performed at a multifunction device (e.g., device 300, Figure 3, or portable multifunction device 100, Figure 1) with a display and a touch-sensitive surface. In some embodiments, the display is a touch screen display and the touch-sensitive surface is on the display. In some embodiments, the display is separate from the touch-sensitive surface. Some operations in method 700 may be combined and/or the order of some operations may be changed.

In some embodiments, a keyboard layout of a hardware keyboard is inferred from secondary sources stored on or associated with the device, such as one or more of: a carrier bundle for mobile communication services associated with the device, digital media subscription information (such as is available from iTunes (R) software), location information from a GPS device, and configuration data for an on-screen keyboard. This is useful when a user of the device wishes to employ the device with a hardware keyboard that does not provide associated keyboard language and layout information. In such a situation, instead of asking the user to answer a number of keyboard configuration questions, without user intervention the device automatically implements one or methods to infer an appropriate language and layout (e.g., QWERY, AZERTY, or Dvorak) for the keyboard based on information available on the device related to the language in which information is likely to be entered by the user and the location in which the device is being used and configures the device and the keyboard to work together based on the inferred information. In some embodiments, these secondary sources are prioritized such that information from more reliable sources is used first to infer the configuration of the keyboard. In some embodiments, an on-screen keyboard is configured to match the inferred language and layout of the hardware keyboard.

Attention is now directed to Figure 7A which illustrates a method 700 of automatically determining a keyboard language and layout in accordance with some embodiments. In some embodiments, obtain at least one of language information and location information from one or more hardware and software information sources associated with the electronic device (702). As used herein, the hardware and software information sources will also be referred to as "secondary sources." The one or more hardware and software sources located on the electronic device or accessible by the electronic device via a wired or wireless connection. A keyboard layout and the keyboard language can be derived from the obtained language and location information. The one or more hardware and software information sources include one or more of a carrier bundle, a hardware keyboard, one or more software modules, mobile communication capabilities and GPS services (704). The one or more software modules include media player software and personal information management software (706). In some embodiments, one or more software modules are remotely located from the electronic device (707). Language information refers to written or spoken language such as English, German or French. The location information includes at least one of country, region, state, and city information (708). In some embodiments, language information and location information is periodically obtained. In some embodiments, language information and location information is obtained in response to connection of a hardware keyboard to the electronic device. In some embodiments, language information and location information is obtained in response to user selection of an input field requiring text input. In some embodiments, the language and location information is collected by the keyboard configuration module 160.

The hardware and software sources or secondary sources are prioritized/ranked based on their reliability. It is noted that the priories/rankings of the sources of information described in the application are exemplary and can be varied based on characteristics of the device and localization information available or associated with the device. It is also noted that, in some embodiments, the secondary sources employed can include a subset or superset of the described sources.

In some embodiments, the hardware and software information sources are prioritized based on reliability of their associated language and location information (710). The prioritizing includes assigning the highest priority to the respective provided language and location information when the hardware keyboard provides at least one of the language and location information (712). The hardware keyboard provides the strongest indication of the hardware keyboard's layout. Many hardware keyboards provide some information relating to the layout of the hardware keyboard. In some embodiments, the hardware keyboard provides full keyboard layout information necessary to configure a device to correctly accept input from a hardware keyboard. The keyboard layout information includes information about the language and the layout of the keys on the hardware keyboard that is used to configure a device to accept input from a hardware keyboard. Stated in another way, the keyboard layout information includes information about the placement of the keys on the keyboard and the language that corresponds to the visual markings that appear on the keys of the keyboard. For example, the language information may specify that the markings on the keys are English, Japanese or Greek. In some embodiments, if the hardware keyboard provides keyboard layout information, language and location information is not obtained from other hardware and software sources. In some embodiments, the hardware keyboard provides language and/or location information instead of keyboard layout information. The location information provides the intended location of the keyboard. For example, the hardware keyboard may specify that the keyboard is intended for a certain country.

The prioritizing also includes assigning second highest priority to the respective provided language and location information when the electronic device include a software module that provides at least one of language and location information associated with a user of the device (712). Language and location information obtained from software modules may be considered second most reliable because it is entered by the user. In some embodiments, the information provides an indication as to what the user thinks is the layout of the hardware keyboard. In some embodiments, the information provides the language used by the user and location of the user, from which a keyboard layout can be determined or inferred. In some embodiments, the language and location information may be obtained from one or more software modules on the electronic device. For example, the language and location may be obtained from preferences, options and profiles on the electronic device. In some embodiments, the language and location information is obtained one or more software modules remotely located from the electronic device. For example, a user's associated language and location information may be obtained from the user's iTunes profile on a server remotely located from the electronic device. In some embodiments, the language information specifies the language of the respective software module. In some embodiments, the location information specifies the location of the user. In some embodiments, some software modules are assigned higher priority than others. For example, a user's iTunes profile may be assigned a higher priority than the user's weather widget.

The prioritizing further includes assigning third highest priority to the language information and location information obtained from the carrier bundle (712). The language and location information provided by carrier provides a strong indication of the user's location. This information is considered less reliable than information from a hardware keyboard or software modules because a user's physical location does not necessary map to a keyboard layout. For example, a user may be traveling. In some embodiments, the carrier bundle includes a mobile country code, a mobile network code, and an access point name. An access point name identifies a packet data network that a mobile device connects to. The packet data network is responsible for providing data connectivity to the mobile device. In some embodiments, the language and location information 502 is derived from the access point name or by accessing one or more resources through the access point name. For example, one or more instructions may be sent to the access point name to acquire an IP address, the mobile country code and the mobile network code. In some embodiments, the language and location information is derived from the mobile country code. For example, mobile country code "466" corresponds to Taiwan. In some embodiments, the mobile network code in combination with the mobile country code identifies a mobile phone operator/carrier. For example, a mobile country code "505" in combination with mobile network code "01" identifies the carrier Telstra in Australia.

The prioritizing furthermore includes assigning fourth highest priority to the language information and location information obtained from the GPS capabilities when the electronic device includes GPS services (712). As discussed above, a user physical location is less reliable than information obtained from the hardware keyboard and software modules. In some embodiments, the secondary sources are prioritized by the keyboard configuration module 160.

A keyboard language and a keyboard layout for the hardware keyboard are determined based on the language information and location information obtained from the information source having the highest relative priority (714). The determined keyboard layout includes an assignment of characters in the determined keyboard language to keys of the hardware keyboards and a format selected from QWERTY, AZERTY and Dvorak formats (716). If the hardware keyboard provides keyboard layout information then the determined keyboard language and keyboard layout correspond to the keyboard layout information provided by the hardware keyboard. When only language and/or location information is available, the language and/or location information is mapped to a keyboard language and layout. Stated in another way, using the obtained language and/or location information the keyboard language and layout can be determined or guessed. For example, if the obtained language information is English and the obtained location is the United States then the keyboard layout is mostly likely QWERTY. In another example, if the obtained language is French and the location is France then the keyboard layout is most likely AZERTY. In yet another example, if the obtained language is French and the obtained location is Canada the keyboard layout could be Canadian Multilingual Standard or Canadian French. In some embodiments, the keyboard language and layout is determined from the location information alone. In some embodiments, the keyboard language and layout is determined from the obtained language information alone. In some embodiments, the keyboard layout is determined by the keyboard configuration module 160.

The electronic device is configured to interpret key input signals from the hardware keyboard based on the determined keyboard language and keyboard layout (718). After the configuration, when a user presses a key on the hardware keyboard the on screen input should show the symbol corresponding to the user's selection. For example, as shown in Figure 6B, the displayed input 631 corresponds to the sequence of key presses (i.e., 620, 622, 623 and 624). The electronic device is configured automatically and without any user action. In some embodiments, the keyboard is configured without requiring user confirmation of the configuration (720). In some embodiments, the electronic device is configured in response to an indication that a hardware keyboard is connected to the electronic device. In some embodiments, the keyboard configuration module 160 configures the device.

In some embodiments, an on-screen keyboard presented on the display is configured to correspond visually to the determined keyboard language and the determined keyboard layout (722). As shown in Figure 6D, an on-screen keyboard 114 may correspond to the layout of a hardware keyboard 610. In some embodiments, the device is configured to accept input from the on-screen keyboard or the hardware keyboard. In some embodiments the on-screen keyboard or the hardware keyboard is disabled while the other is active.

In some embodiments, the determined keyboard layout is the user's preferred keyboard layout. Similar methods are used to determine the language and layout of an on-screen keyboard even when there is no hardware keyboard. If a hardware keyboard is connected to the device, the hardware keyboard provides the most reliable source of the user's preferred on-screen keyboard layout. It can be inferred that if a user chooses to use a particular hardware keyboard, the user has a preference for the keyboard layout corresponding to the chosen hardware keyboard.

In some embodiments, an option to view one or more keyboard configurations is presented to the user (724). For example, a user may be able to select graphical keyboard representations of QWERTY, AZERTY or Dvorak keyboards. The user may also specify location and/or language information and one or more matching keyboard layouts may be presented to the user. A contact with the touch-sensitive display that corresponds to a respective keyboard configuration is detected and the electronic device is configured to interpret key input signals form the hardware keyboard based on the respective keyboard configuration in response to the detected contact (724).

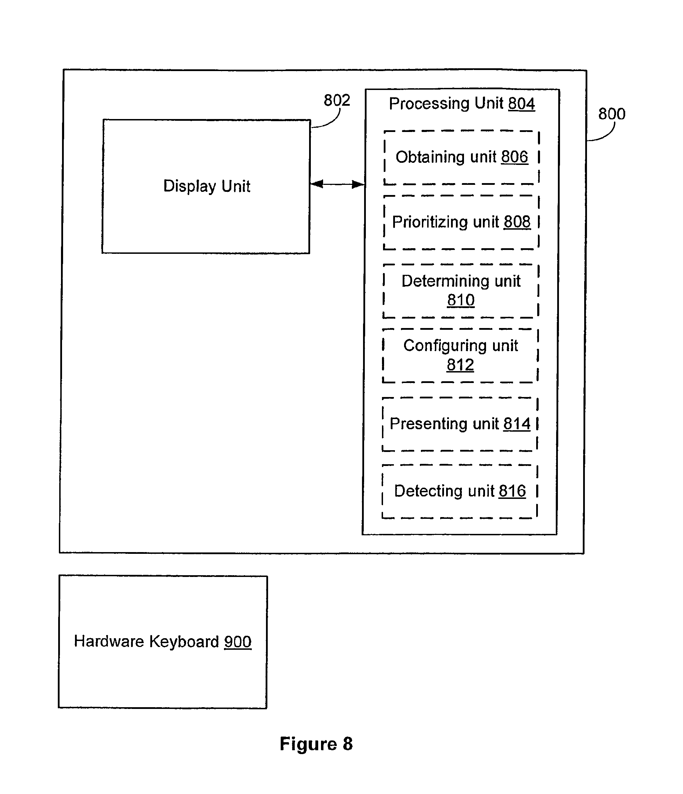

In accordance with some embodiments, Figure 8 shows a functional block diagram of an electronic device 800 configured in accordance with the principles of the invention as described above. The functional blocks of the device may be implemented by hardware, software, or a combination of hardware and software to carry out the principles of the invention. It is understood by persons of skill in the art that the functional blocks described in Figure 8 may be combined or separated into sub-blocks to implement the principles of the invention as described above. Therefore, the description herein may support any possible combination or separation or further definition of the functional blocks described herein.

As shown in Figure 8, an electronic device 800 includes a processing unit 804 and a display unit 802 coupled to the processing unit 804. In some embodiments, the processing unit 804 includes an obtaining unit 806, a prioritizing unit 808, a determining unit 810, a configuring unit 812, a presenting unit 814, and a detecting unit 816.

In some embodiments, the processing unit 804 is configured to: obtain at least one of language information and location information from one or more hardware and software information sources associated with the electronic device 800 (e.g., with the obtaining unit 806); prioritize the hardware and software information sources based on reliability of their associated language and location information (e.g., with the prioritizing unit 808); determine a keyboard language and a keyboard layout for a hardware keyboard 900 based on the language information and location information obtained from the information source having highest relative priority (e.g., with the determining unit 810); and configure the electronic device 800 to interpret key input signals from the hardware keyboard 900 based on the determined keyboard language and keyboard layout (e.g., with the configuring unit 812).The display unit 802 is configured to display information associated with the interpreted key input signal.

In some embodiments, the display unit 802 is a touch-sensitive display, and the processing unit 804 is further configured to configure an on-screen keyboard presented on the display unit 802 to correspond visually to the determined keyboard language and the determined keyboard layout (e.g., with the configuring unit 812).

In some embodiments, the one or more hardware and software information sources include one or more of a carrier bundle, the hardware keyboard 900, one or more software modules, mobile communication capabilities, and GPS services.

In some embodiments, the location information includes at least one of country, region, state and city information.

In some embodiments, the determined keyboard layout includes an assignment of characters in the determined keyboard language to keys of the hardware keyboard 900 and a format selected from QWERTY, AZERTY, and Dvorak formats.

In some embodiments, the prioritizing includes: when the hardware keyboard 900 provides at least one of language and location information, assigning highest priority to the respective provided language and location information; when the electronic device 800 includes a software module that provides at least one of language and location information associated with a user of the device, assigning second highest priority to the respective provided language and location information; when the electronic device 800 includes the carrier bundle, assigning third highest priority to the language information and location information obtained from the carrier bundle; and when the electronic device 800 includes GPS services, assigning fourth highest priority to the language information and location information obtained from the GPS capabilities.

In some embodiments, one or more software modules are remotely located from the electronic device 800.

In some embodiments, the one or more software modules includes media player software and personal information management software.

In some embodiments, the processing unit 804 is further configured to: present to the user an option to view one or more keyboard configurations (e.g., with the presenting unit 814); detect a contact with a touch-sensitive display that corresponds to a respective keyboard configuration (e.g., with the detecting unit 816); and, in response to the detected contact, configure the electronic device 800 to interpret key input signals from the hardware keyboard 900 based on the respective keyboard configuration (e.g., with the configuring unit 812).

In some embodiments, the hardware keyboard 900 is configured without requiring user confirmation of the configuration.

In some embodiments, the hardware keyboard 900 is configured without user intervention.

In some embodiments, the processing unit 804 is configured to: obtain at least one of language information and location information from one or more information sources associated with the electronic device 800 (e.g., with the obtaining unit 806); prioritize the information sources based on reliability of their associated language and location information (e.g., with the prioritizing unit 808); determine a keyboard language and a keyboard layout for a keyboard based on the language information and location information obtained from the information source having highest relative priority (e.g., with the determining unit 810); and configure the electronic device 800 to interpret input signals from the keyboard based on the determined keyboard language and keyboard layout (e.g., with the configuring unit 812). The display unit 802 is configured to display information associated with the interpreted key input signal.

In some embodiments, the display unit 802 is a touch-sensitive display and the keyboard is an on-screen keyboard.

In some embodiments, the keyboard is a hardware keyboard 900.

The steps in the information processing methods described above may be implemented by running one or more functional modules in information processing apparatus such as general purpose processors or application specific chips. These modules, combinations of these modules, and/or their combination with general hardware (e.g., as described above with respect to Figures 1A, 1B and 3) are all included within the scope of protection of the invention.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A computer-implemented method, comprising:
at an electronic device including one or more processors, memory, and a display:
obtaining at least one of language information and location information from a plurality of hardware and software information sources associated with the electronic device (702);
prioritizing the hardware and software information sources based on reliability of their associated language and location information (710);
determining a keyboard language and a keyboard layout for a hardware keyboard based on the language information and location information obtained from the information source having highest relative priority (714); and
configuring the electronic device to interpret key input signals from the hardware keyboard based on the determined keyboard language and keyboard layout (718).

2. The method of claim 1, wherein the display is a touch-sensitive display, further comprising configuring an on-screen keyboard presented on the display to correspond visually to the determined keyboard language and the determined keyboard layout (722).

3. The method of claim 1 or 2, wherein the plurality of hardware and software information sources include two or more of the hardware keyboard, one or more software modules, a carrier bundle, and GPS services (704).

4. The method of any of claims 1 to 2, wherein the location information includes at least one of country, region, state and city information (708).

5. The method of claim 3, wherein the location information includes at least one of country, region, and state information (708).

6. The method of any of claims 1 to 5, wherein the determined keyboard layout includes an assignment of characters in the determined keyboard language to keys of the hardware keyboard and a format selected from QWERTY, AZERTY, and Dvorak formats (716).

7. The method of claim 3, wherein the prioritizing includes (712):
when the hardware keyboard provides at least one of language and location information, assigning highest priority to the respective provided language and location information;
when the electronic device includes a software module that provides at least one of language and location information associated with a user of the device, assigning second highest priority to the respective provided language and location information;
when the electronic device includes the carrier bundle, assigning third highest priority to the language information and location information obtained from the carrier bundle; and
when the electronic device includes GPS services, assigning fourth highest priority to the language information and location information obtained from the GPS services.

8. The method of any of claims 3 to 7, wherein one or more software modules are remotely located from the electronic device (707).

9. The method of any of claims 3 to 8, wherein the one or more software modules include media player software and personal information management software (706).

10. The method of any of claims 1 to 9, further comprising (724):
presenting to the user an option to view one or more keyboard configurations;
detecting a contact with a touch-sensitive display that corresponds to a respective keyboard configuration; and
in response to the detected contact, configuring the electronic device to interpret key input signals from the hardware keyboard based on the respective keyboard configuration.

11. The method of any of claims 1 to 10, wherein:
the hardware keyboard is configured without requiring user confirmation of the configuration (720).

12. The method of any of claims 1 to 9 and 11, wherein the hardware keyboard is configured without user intervention.

13. A portable electronic device (100), comprising:
a display (112);
a memory (102);
one or more processors (120);
one or more programs (160) stored in memory and configured for execution by the one or more processors, the one or more programs including instructions for:
obtaining at least one of language information and location information (502) from a plurality of hardware and software information sources associated with the electronic device;
prioritizing the hardware and software information sources based on reliability of their associated language and location information (710);
determining a keyboard language and a keyboard layout for a hardware keyboard based on the language information and location information obtained from the information source having highest relative priority (714); and
configuring the electronic device to interpret key input signals from the hardware keyboard based on the determined keyboard language and keyboard layout (718).

14. A computer readable medium comprising one or more programs, the one or more programs comprising instructions, which when executed by an electronic device with a display, cause the device to:
perform the method of any of claims 1 to 12.

## Patentansprüche

1. Computer-implementiertes Verfahren, das aufweist:
an einer elektronischen Vorrichtung, die einen oder mehr Prozessoren, einen Speicher und eine Anzeige aufweist:
Erhalten einer Sprach-Information und/oder einer Standort-Information von einer Vielzahl an Hardware- und Software-Informationsquellen, die mit der elektronischen Vorrichtung (702) assoziiert sind;
Priorisieren der Hardware- und Software-Informationsquellen basierend auf der Zuverlässigkeit der ihnen zugewiesenen Sprach- und Standort-Informationen (710);
Bestimmen einer Tastatursprache und eines Tastaturlayouts für eine Hardware-Tastatur basierend auf der Sprach-Information und der Standort-Information, die von der Informationsquelle mit der höchsten relativen Priorität (714) erhalten wurden; und
Konfigurieren der elektronischen Vorrichtung, um Tasten-Eingabesignale von der Hardware-Tastatur basierend auf der bestimmten Tastatursprache und dem bestimmten Tastaturlayout (718) zu interpretieren.

2. Verfahren nach Anspruch 1, wobei die Anzeige eine Berührungs-sensitive Anzeige ist, wobei das Verfahren ferner aufweist ein Konfigurieren einer Bildschirm-Tastatur, die auf der Anzeige angezeigt wird, derart, dass sie visuell der bestimmten Tastatursprache und dem bestimmten Tastaturlayout (722) entspricht.

3. Verfahren nach Anspruch 1 oder 2, wobei die Vielzahl an Hardware- und Software-Informationsquellen zwei oder mehr von Folgenden umfasst: die Hardware-Tastatur, ein oder mehr Softwaremodule, ein Trägerbündel und GPS-Dienste (704).

4. Verfahren nach einem der Ansprüche 1 bis 2, wobei die Standort-Information zumindest eines der Folgenden umfasst: Land-Information, Regions-Information, Staats-Information und Stadt-Information (708).

5. Verfahren nach Anspruch 3, wobei die Standort-Information zumindest eines der Folgenden umfasst: Land-Information, Regions-Information und Staat-Information (708).

6. Verfahren nach einem der Ansprüche 1 bis 5, wobei das bestimmte TastaturLayout eine Zuweisung von Zeichen in der bestimmten Tastatursprache zu den Tasten der Hardware-Tastatur und einem Format aufweist, das von QWERTY, AZERTY und Dvorak-Formaten (716) ausgewählt wurde.

7. Verfahren nach Anspruch 3, wobei das Priorisieren umfasst (712):
wenn die Hardware-Tastatur eine Sprach- und/oder Standort-Information bereitstellt, Zuweisen der höchsten Priorität zu der jeweiligen bereitgestellten Sprach- und Standort-Information;
wenn die elektronische Vorrichtung ein Software-Modul umfasst, das eine Sprach- und/oder Standort-Information bereitstellt, die mit einem Benutzer der Vorrichtung assozüert ist, Zuweisen einer zweiten höchsten Priorität zu der jeweiligen bereitgestellten Sprach- und Standort-Information;
wenn die elektronische Vorrichtung das Träger-Bündel umfasst, Zuweisen einer dritten höchsten Priorität zu der Sprach-Information und der Standort-Information, die von dem Träger-Bündel erhalten wurden; und
wenn die elektronische Vorrichtung GPS-Dienste umfasst, Zuweisen einer vierten höchsten Priorität zu der Sprach-Information und der Standort-Information, die von dem GPS-Dienst erhalten wurden.

8. Verfahren nach einem der Ansprüche 3 bis 7, wobei eines oder mehr SoftwareModule von der elektronischen Vorrichtung (707) entfernt angeordnet sind.

9. Verfahren nach einem der Ansprüche 3 bis 8, wobei das eine oder mehr Softwaremodule eine Media-Player-Software und eine Software zum Verwalten personenbezogener Informationen (706) umfasst.

10. Verfahren nach einem der Ansprüche 1 bis 9, das ferner aufweist (724):
Präsentieren dem Benutzer einer Option, eine oder mehr Tastatur-Konfigurationen zu sichten;
Ermitteln eines Kontakts mit der Berührungs-empfindlichen Anzeige, der einer entsprechenden Tastatur-Konfiguration entspricht; und
in Erwiderung auf den ermittelten Kontakt Konfigurieren der elektronischen Vorrichtung, um Tastatur-Eingabesignale von der Hardware-Tastatur basierend auf der entsprechenden Tastatur-Konfiguration zu interpretieren.

11. Verfahren nach einem der Ansprüche 1 bis 10, wobei
die Hardware-Tastatur konfiguriert wird, ohne dass eine Benutzer-Bestätigung der Konfiguration (720) erforderlich ist.

12. Verfahren nach einem der Ansprüche 1 bis 9 und 11, wobei die Hardware-Tastatur ohne einen Eingriff seitens des Benutzers konfiguriert wird.

13. Eine tragbare elektronische Vorrichtung (100), die aufweist:
eine Anzeige (112);
einen Speicher (102);
einen oder mehr Prozessoren (120);
ein oder mehr Programme (160), die im Speicher gespeichert sind und zum Ausführen durch den einen oder mehr Prozessoren konfiguriert sind, wobei das eine oder mehr Programme Instruktionen umfassen zum:
Erhalten einer Sprach-Information und/oder einer Standort-Information (502) aus einer Vielzahl an Hardware- und Software-Informationsquellen, die mit der elektronischen Vorrichtung assoziiert sind;
Priorisieren der Hardware- und Software-Informationsquellen basierend
auf der Zuverlässigkeit der ihnen zugewiesenen Sprach- und Standort-Informationen (710);
Bestimmen einer Tastatursprache und eines Tastaturlayouts für eine Hardware-Tastatur basierend auf der Sprach-Information und der Standort-Information, die von der Informationsquelle mit der höchsten relativen Priorität (714) erhalten wurden; und
Konfigurieren der elektronischen Vorrichtung, um Tasten-Eingabesignale von der Hardware-Tastatur basierend auf der bestimmten Tastatursprache und dem bestimmten Tastaturlayout (718) zu interpretieren.

14. Computer-lesbares Medium, das ein oder mehr Programme aufweist, wobei das eine oder mehr Programme Instruktionen aufweisen, die, wenn durch eine elektronische Vorrichtung mit einer Anzeige ausgeführt, die Vorrichtung veranlassen, das Verfahren nach einem der Ansprüche 1 bis 12 auszuführen.

## Revendications

1. Un procédé mis en oeuvre par calculateur, comprenant :
au niveau d'un dispositif électronique comprenant un ou plusieurs processeurs, de la mémoire et un afficheur :
l'obtention d'au moins l'une d'entre une information de langue et une information de localisation à partir d'une pluralité de sources matérielles et logicielles associées au dispositif électronique (702) ;
le classement des priorités des sources d'information matérielles et logicielles sur la base de la fiabilité de leurs informations de langue et de localisation associées (710) ;
la détermination d'une langue de clavier et d'une configuration de clavier pour un clavier matériel sur la base de l'information de langue et de l'information de localisation obtenues à partir de la source d'information présentant la priorité relative la plus élevée (714) ; et
la configuration du dispositif électronique pour interpréter des signaux d'entrée de clavier en provenance du clavier matériel sur la base de la langue de clavier et de la configuration de clavier (718) déterminées.

2. Le procédé de la revendication 1, où l'afficheur est un afficheur sensible au toucher, comprenant en outre la configuration d'un clavier sur écran présenté sur l'afficheur pour qu'il corresponde visuellement à la langue de clavier déterminée et à la configuration de clavier déterminée (722).

3. Le procédé de la revendication 1 ou 2, dans lequel la pluralité de sources d'information matérielles et logicielles comprennent deux ou plus d'entre le clavier matériel, un ou plusieurs modules logiciels, un *carrier bundle*, et des services GPS (704).

4. Le procédé de l'une des revendications 1 à 2, dans lequel l'information de localisation comprend une information (708) d'au moins l'un d'entre un pays, une région, un état et une ville.

5. Le procédé de la revendication 3, dans lequel l'information de localisation comprend au moins l'une d'entre une information de pays, de région et d'état (708).

6. Le procédé de l'une des revendications 1 à 5, dans lequel la configuration de clavier déterminée comprend une attribution de caractères dans la langue de clavier déterminée à des touches du clavier matériel et un format choisi parmi les formats QWERTY, AZERTY et Dvorak (716).

7. Le procédé de la revendication 3, dans lequel le classement des priorités comprend (712) :
lorsque le clavier matériel donne au moins l'une d'entre l'information de langue et de localisation, l'attribution de la priorité la plus élevée à l'information respective de langue et de localisation donnée ;
lorsque le dispositif électronique comprend un module logiciel qui donne au moins l'une d'entre l'information de langue et de localisation associée à un utilisateur du dispositif, l'attribution de la seconde priorité la plus élevée à l'information de langue et de localisation donnée respective ;
lorsque le dispositif électronique comprend le *carrier bundle*, l'attribution de la troisième priorité la plus élevée à l'information de langue et à l'information de localisation obtenues à partir du *carrier bundle* ; et
lorsque le dispositif électronique comprend des services GPS, l'attribution de la quatrième priorité la plus élevée à l'information de langue et à l'information de localisation obtenues à partir des services GPS.

8. Le procédé de l'une des revendications 3 à 7, dans lequel un ou plusieurs modules logiciels sont situés à distance du dispositif électronique (707).

9. Le procédé de l'une des revendications 3 à 8, dans lequel les un ou plusieurs modules logiciels comprennent un logiciel lecteur de media et un logiciel de gestion d'informations personnelles (706).

10. Le procédé de l'une des revendications 1 à 9, comprenant en outre (724) :
la présentation à l'utilisateur d'une option de visualisation d'une ou plusieurs configurations de clavier ;
la détection d'un contact sur un afficheur sensible au toucher qui correspond à une configuration de clavier respective ; et
en réponse au contact détecté, la configuration du dispositif électronique pour qu'il interprète des signaux d'entrée de touche en provenance du clavier matériel sur la base de la configuration de clavier respective.

11. Le procédé de l'une des revendications 1 à 10, dans lequel :
le clavier matériel est configuré sans avoir besoin d'une confirmation par l'utilisateur de la configuration (720).

12. Le procédé de l'une des revendications 1 à 9 et 11, dans lequel le clavier matériel est configuré sans intervention de l'utilisateur.

13. Un dispositif électronique portable (100), comprenant :
un afficheur (112) ;
une mémoire (102) ;
un ou plusieurs processeurs (120) ;
un ou plusieurs programmes (160) stockés en mémoire et configurés pour être exécutés par les un ou plusieurs processeurs, et un ou plusieurs programmes comprenant des instructions permettant :
l'obtention d'au moins l'une d'entre une information de langue et une information de localisation (502) à partir d'une pluralité de sources matérielles et logicielles associées au dispositif électronique ;
le classement des priorités des sources d'information matérielles et logicielles sur la base de la fiabilité de leurs informations de langue et de localisation associées (710) ;
la détermination d'une langue de clavier et d'une configuration de clavier pour un clavier matériel sur la base de l'information de langue et de l'information de localisation obtenues à partir de la source d'information présentant la priorité relative la plus élevée (714) ; et
la configuration du dispositif électronique pour interpréter des signaux d'entrée de clavier en provenance du clavier matériel sur la base de la langue de clavier et de la configuration de clavier (718) déterminées.

14. Un support lisible par calculateur comprenant un ou plusieurs programmes, les un ou plusieurs programmes comprenant des instructions qui, lorsqu'elles sont exécutées par un dispositif électronique avec un afficheur, font en sorte que le dispositif :
met en oeuvre le procédé de l'une des revendications 1 à 12.
